(19) Europäisches Patentamt / European Patent Office / Office européen des brevets

(11) **EP 4 513 864 A1**

(12) **EUROPEAN PATENT APPLICATION**

(43) Date of publication:
**26.02.2025 Bulletin 2025/09**

(21) Application number: **24155321.3**

(22) Date of filing: **01.02.2024**

(51) International Patent Classification (IPC):
*H04N 1/00* (2006.01)     *G06F 3/12* (2006.01)

(52) Cooperative Patent Classification (CPC):
**H04N 1/00015; G06F 3/1208; G06F 3/1259;
G06F 3/1285; H04N 1/00039; H04N 1/00047;
H04N 1/0005; H04N 1/00055; H04N 1/00063;**
G06F 3/1282

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.08.2023 JP 2023134875**

(71) Applicant: FUJIFILM Business Innovation Corp.
Minato-ku
Tokyo (JP)

(72) Inventors:
• **OHIRA, Yoshie**
  **Yokohama-shi, Kanagawa (JP)**
• **KIKUMOTO, Takashi**
  **Yokohama-shi, Kanagawa (JP)**
• **ISHIKAWA, Shogo**
  **Yokohama-shi, Kanagawa (JP)**

(74) Representative: **Kurig, Thomas**
**Becker Kurig & Partner**
**Patentanwälte mbB**
**Bavariastraße 7**
**80336 München (DE)**

(54) **IMAGE INSPECTION SYSTEM, INFORMATION PROCESSING APPARATUS, AND PROGRAM**

(57)     An image inspection system includes a processor and an inspection execution unit that performs an image inspection of a printed matter, in which the processor is configured to acquire first position information that is information on a position of the image inspection set in image data and to acquire second position information that is information on positions of the respective image data in data for printing in which the plural image data are arranged, and the inspection execution unit performs the image inspection of a printed matter on which the data for printing are printed using the first position information and the second position information.

EP 4 513 864 A1

## Description

BACKGROUND OF THE INVENTION

(i) Field of the Invention

The present invention relates to an image inspection system, an information processing apparatus, and a program.

(ii) Description of Related Art

JP2020-93425A discloses an image inspection device that sets image inspection regions in which an image inspection is to be performed in images formed on the sheet according to an aspect and settings of integration in a case where images in which whether or not to perform an image inspection is set for each page are to be integrated and printed on one page of a sheet.

SUMMARY OF THE INVENTION

In a case where an image inspection is performed on a printed matter on which data for printing in which image data are arranged on an identical page are printed, a burden on a user required for the image inspection of the printed matter on which the data for printing are printed is likely to increase depending on the arrangement of the image data in the data for printing, or the like.

An object of the present invention is to reduce a burden on a user required for the image inspection of a printed matter on which the data for printing are printed as compared to a case where the image inspection of a printed matter on which data for printing are printed is performed without the use of information on the position of an image inspection target set in the image data arranged in the data for printing.

According to a first aspect of the present disclosure, there is provided an image inspection system including a processor and an inspection execution unit that performs an image inspection of a printed matter. The processor is configured to: acquire first position information that is information on a position of the image inspection set in image data; and acquire second position information that is information on positions of the respective image data in data for printing in which the plurality of image data are arranged. The inspection execution unit performs the image inspection of a printed matter on which the data for printing are printed using the first position information and the second position information.

According to a second aspect of the present disclosure, in the image inspection system according to the first aspect, the processor may be configured to: acquire angle information that is information on rotation angles of the image data in the data for printing; and perform the image inspection of the printed matter using the angle information.

According to a third aspect of the present disclosure, in the image inspection system according to the first or second aspect, the processor may be configured to: acquire scaling information that is information on enlargement or reduction of the image data in the data for printing; and perform the image inspection of the printed matter using the scaling information.

According to a fourth aspect of the present disclosure, in the image inspection system according to any one of the first to third aspects, the processor may be configured to: receive a designation related to a position of the image inspection for each of the image data; and acquire the first position information.

According to a fifth aspect of the present disclosure, in the image inspection system according to the fourth aspect, the processor may be configured to: receive a designation of a region in which the image inspection is to be performed or a region in which the image inspection is not to be performed for each of the image data as the designation related to the position of the image inspection; and acquire the first position information.

According to a sixth aspect of the present disclosure, in the image inspection system according to the fourth aspect, the processor may be configured to: receive a selection of an object to be subjected to the image inspection or an object not to be subjected to the image inspection for each of the image data among objects forming the image data as the designation related to the position of the image inspection; and acquire the first position information.

According to a seventh aspect of the present disclosure, in the image inspection system according to the fourth aspect, the processor may be configured to: acquire information on at least one of a type of the image inspection or accuracy of the image inspection together with the designation related to the position of the image inspection.

According to an eighth aspect of the present disclosure, in the image inspection system according to any one of the first to seventh aspects, the processor may be configured to: set inspection regions in which the image inspection of the printed matter on which the data for printing are printed is to be performed using the first position information and the second position information; and output the inspection region set in one of the plurality of data for printing to the inspection execution unit and set the inspection regions in the other data for printing different from the one of the data for printing after the image inspection of a printed matter using the one of the data for printing is started by the inspection execution unit, in a case where the inspection regions are set in the plurality of data for printing.

According to a ninth aspect of the present disclosure, in the image inspection system according to any one of the first to seventh aspects, the processor may be configured to: set inspection regions in which the image inspection of the printed matter on which the data for printing are printed is to be performed using the first position information and the second position information; and collectively output the inspection regions, which are set in the plurality of data for printing, to the inspection execution unit, in a case where the inspection regions are set in the plurality of data for printing.

According to a tenth aspect of the present disclosure, the image inspection system according to any one of the first to ninth aspects may further include a display unit that displays information on the image inspection, and the processor may be configured to: cause the display unit to display a display screen on which the data for printing and positions at which the image inspection of the printed matter on which the data for printing are printed is to be performed are displayed together.

According to an eleventh aspect of the present disclosure, in the image inspection system according to the tenth aspect, the processor may be configured to: receive settings of positions in the data for printing at which the image inspection is to be performed via the display screen displayed on the display unit.

According to a twelfth aspect of the present disclosure, in the image inspection system according to the eleventh aspect, the processor may be configured to: apply the settings of the positions at which the image inspection is to be performed to the position of the image inspection set in the image data that are arranged in the data for printing, in a case where the processor receives the settings of the positions in the data for printing at which the image inspection is to be performed.

According to a thirteenth aspect of the present disclosure, there is provided an information processing apparatus including a processor. The processor is configured to: acquire first position information that is information on a position of an image inspection set in image data; acquire second position information that is information on positions of the respective image data in data for printing in which the plurality of image data are arranged; and determine positions at which the image inspection is to be performed on a printed matter on which the data for printing are printed using the first position information and the second position information.

According to a fourteenth aspect of the present disclosure, there is provided a program causing a computer to realize a function of acquiring first position information that is information on a position of an image inspection set in image data, a function of acquiring second position information that is information on positions of the respective image data in data for printing in which the plurality of image data are arranged, and a function of determining positions at which the image inspection is to be performed on a printed matter on which the data for printing are printed using the first position information and the second position information.

According to the first aspect, it is possible to reduce a burden on a user required for the image inspection of a printed matter on which the data for printing are printed as compared to a case where the image inspection of a printed matter on which data for printing are printed is performed without the use of information on the position of an image inspection target set in the image data arranged in the data for printing.

According to the second aspect, in a case where the image data are rotated and the data for printing are disposed, it is possible to perform the image inspection of a printed matter on which the data for printing are printed.

According to the third aspect, it is possible to perform the image inspection of a printed matter on which the data for printing are printed to correspond to the enlargement or reduction of the image data in the data for printing.

According to the fourth to sixth aspects, it is possible to further reduce a burden on a user required for the image inspection of a printed matter on which the data for printing are printed, as compared to a case where a designation related to the position of an image inspection is not received for each of the image data.

According to the seventh aspect, it is easy to perform an image inspection corresponding to the image data as compared to a case where information on the type of an image inspection or the accuracy of an image inspection is not acquired.

According to the eighth aspect, it is possible to shorten a period until an image inspection on a plurality of data for printing is completed as compared to a case where inspection regions set in a plurality of data for printing are collectively output to the inspection execution unit.

According to the ninth aspect, processing of outputting inspection regions is simplified as compared to a case where inspection regions set in a plurality of data for printing are output for each data for printing.

According to the tenth aspect, a user can confirm positions in data for printing at which an image inspection is to be performed that are set on the basis of inspection information of image data.

According to the eleventh aspect, it is possible to set positions at which an image inspection is to be performed after confirming positions in data for printing at which an image inspection is to be performed.

According to the twelfth aspect, a user can confirm the change of positions in the data for printing at which an image inspection is to be performed according to the settings of positions at which an image inspection is to be performed.

According to the thirteenth aspect, it is possible to reduce a burden on a user required for the image inspection of a printed matter on which the data for printing are printed as compared to a case where the image inspection of a printed matter on which data for printing are printed is performed without the use of information on the position of an image inspection target set in the image data arranged in the data for printing.

According to the fourteenth aspect, it is possible to reduce a burden on a user required for the image inspection of a printed matter on which the data for printing are printed as compared to a case where the image inspection of a printed matter on which data for printing are printed is performed without the use of information on the position of an image inspection target set in the image data arranged in the data for printing.

BRIEF DESCRIPTION OF THE DRAWINGS

Exemplary embodiment(s) of the present invention will be described in detail based on the following figures, wherein:

Fig. 1 is a diagram illustrating a configuration of a printing system to which an exemplary embodiment is applied;
Fig. 2 is a functional block diagram of a server device to which the present exemplary embodiment is applied;
Fig. 3 is a diagram illustrating an aspect of imposition of image data and shows an example of an arrangement order of image data that are arranged in data for printing by cut-and-stack;
Fig. 4 is a diagram showing an example of imposition information that is generated by an imposition information generation unit in a case where the image data are imposed according to the aspect shown in Fig. 3;
Fig. 5 is a diagram showing an example of functional blocks of a printing device;
Fig. 6 is a diagram showing an example of inspection setting information;
Figs. 7A to 7F are diagrams illustrating processing of generating inspection information by an inspection information generation unit;
Fig. 8 is a diagram showing an example of inspection information that is generated by the inspection information generation unit;
Fig. 9 is a diagram illustrating a method of calculating coordinates, a width, and a length of an inspection region in data for printing with the inspection information generation unit;
Figs. 10A to 10C are diagrams illustrating the method of calculating coordinates, a width, and a length of an inspection region in the data for printing with the inspection information generation unit;
Figs. 11A and 11B are diagrams illustrating another example of the processing of generating inspection information with the inspection information generation unit;
Figs. 12A and 12B are diagrams illustrating another example of the processing of generating inspection information with the inspection information generation unit;
Figs. 13A and 13B are diagrams illustrating another example of the processing of generating inspection information with the inspection information generation unit;
Fig. 14 is a flowchart showing a procedure of processing of setting an inspection region in data for printing with the server device to which the present exemplary embodiment is applied;
Fig. 15 is a diagram showing an example of a setting screen that is one of UI screens displayed by a display control unit and is used to set an inspection target region for each of image data arranged in data for printing; and
Fig. 16 is a diagram showing an example of a confirmation screen that is one of UI screens displayed by the display control unit and is used to confirm a position of an inspection region set in data for printing by the inspection information generation unit.

DETAILED DESCRIPTION OF THE INVENTION

Exemplary embodiments of the present invention will be described below with reference to the accompanying drawings.

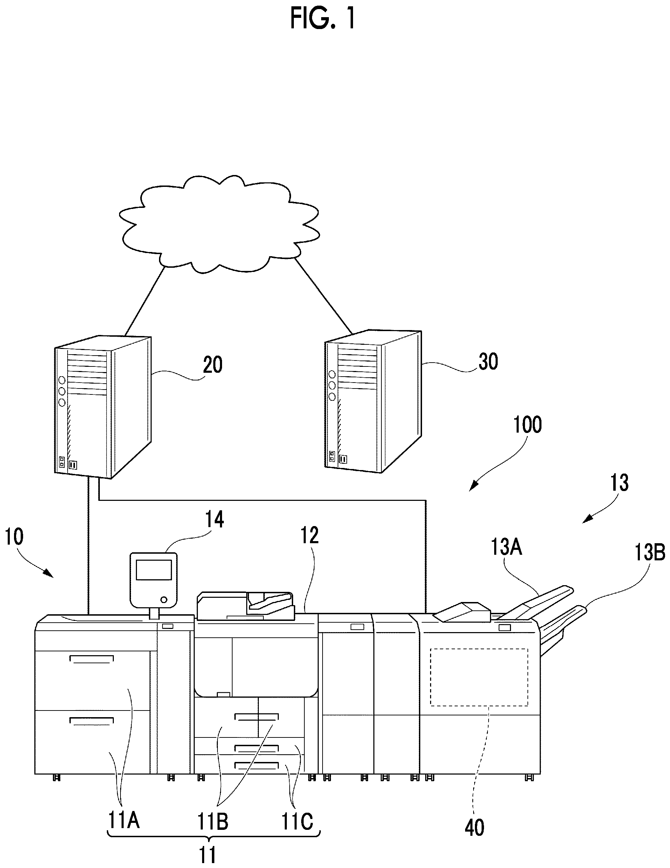

Fig. 1 is a diagram illustrating a configuration of a printing system 100 to which the present exemplary embodiment is applied.
The printing system 100 shown in Fig. 1 is adapted to include a printing device 10 that performs printing on a sheet as an example of a recording medium. The printing device 10 and server devices 20 and 30 are connected to each other to be capable of communicating with each other. The printing system 100 is an example of an image inspection system.
For example, a local area network (LAN) or the Internet is used as a network connecting the printing device 10 and the server devices 20 and 30. Meanwhile, the network may be a composite type of the LAN and the Internet.
The printing device 10 prints an image on a sheet on the basis of an acquired printing instruction. The printing instruction mentioned here is, for example, a job definition format (JDF), and includes information on an image to be printed, information on settings related to printing, and the like.
The printing device 10 is, for example, a so-called production printer used for printing for business use, and has a function of being capable of executing high-speed printing processing with high image quality. Further, the printing device 10 has a function of verifying printing results of a printed matter that is the sheet on which the image is printed.
Further, the printing device 10 may have a function of being capable of executing post-processing according to a printing instruction. The post-processing mentioned here includes, for example, processing of binding a bundle of sheets, processing of folding the sheets, processing of cutting the sheets, processing of bookbinding, and the like.
The printing device 10 is not limited to the production printer, and may be applied to a general printer (a printer for business use, a printer for home use, or the like). Further, a recording medium on which printing is performed by the printing device 10 may be a film and the like in addition to a sheet.

The printing device 10 includes a sheet feed unit 11 that feeds a sheet to be printed, a printing unit 12 that performs printing on the sheet fed from the sheet feed unit 11, a discharge device 13 that discharges the printed sheet, and an operation display unit 14 that is to be operated by a user or an operator.

The sheet feed unit 11 is adapted to include a plurality of sheet feed trays 11A, 11B, and 11C that feed sheets. The respective sheet feed trays 11A to 11C can feed sheets having sizes different from each other or an identical size.

The printing unit 12 not only may use an electrophotographic method of transferring toner, which adheres to a photoreceptor charged and exposed to light, onto a recording material to fix and form an image, and but also may use, for example, an inkjet method of jetting ink onto a recording material to form an image.

The printing unit 12 is adapted to be capable of executing two-sided printing in which printing is performed on both sides of the sheet.

In the present exemplary embodiment, the discharge device 13 is adapted to include discharge trays 13A and 13B to which sheets are sorted according to inspection results.

Further, the discharge device 13 is provided with an inspection device 40 that performs an image inspection for verifying printing results of a printed matter. The inspection device 40 inspects the printing results of a printed matter using comparison between data for printing and scan data of the printed matter, which is printed according to the data for printing, on the basis of information (inspection information to be described later) that is acquired from the server device 20 and is related to an image inspection. The discharge device 13 may discharge a sheet, which is the printed matter, from any one of the discharge trays 13A and 13B according to inspection results obtained from the inspection device 40. The inspection device 40 may use one of the scan data of the printed matter, which is printed according to the data for printing, as a reference and may inspect the printing results of the printed matter using comparison between the scan data, which is used as the reference, and the other scan data.

The operation display unit 14 is adapted to include a display unit that displays various images for operations and various types of information to be notified to a user, and an input unit in which various buttons for input are disposed according to the images for operations of the display unit. The operation display unit 14 may be adapted such that a display screen is formed of, for example, a touch panel and the touch panel has functions of the display unit and the input unit.

The printing device 10 according to the present exemplary embodiment has a function of optically scanning an image of a document or the like and a function of sending documents to a scanned region one by one, in addition to a function of printing an image on a sheet. The functions listed for the printing device 10 are merely examples, and do not prevent the printing device 10 from having other functions.

The server devices 20 and 30 may be physically one computer, or may be realized by distributed processing using a plurality of computers. Further, although the server devices 20 and 30 are formed of a shared server that provides a so-called cloud service in the present exemplary embodiment, the server devices 20 and 30 may be on-premises type servers.

In a case where the server device 20 receives a printing instruction from, for example, the server device 30, the server device 20 imposes the image data included in the printing instruction and then performs rasterization processing to generate data for printing to be printed on a sheet. Then, the data for printing are transmitted to the printing device 10. The server device 20 is an example of an information processing apparatus.

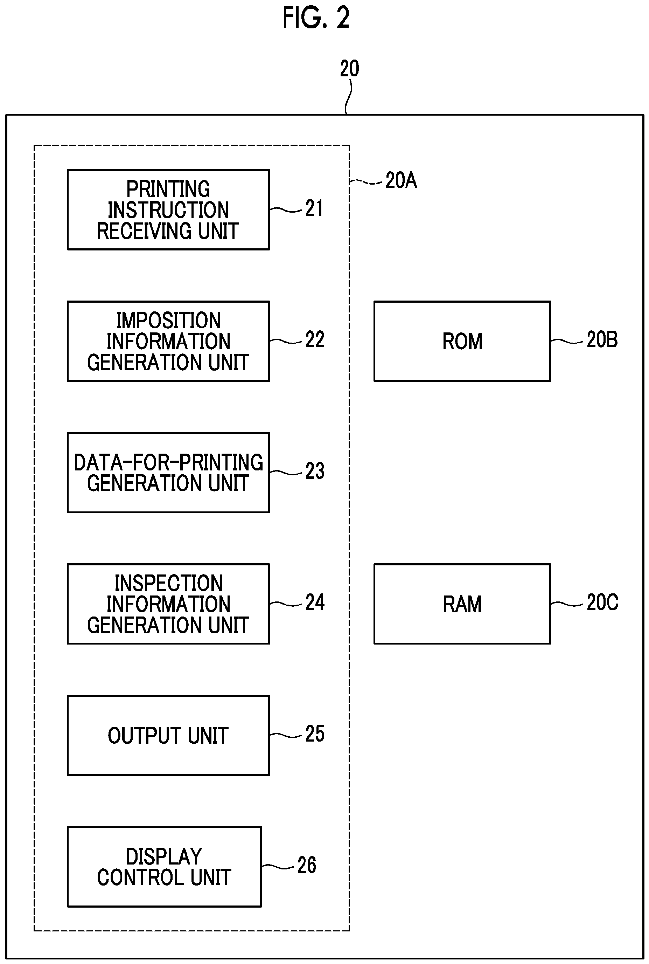

Fig. 2 is a functional block diagram of the server device 20 to which the present exemplary embodiment is applied.

As shown in Fig. 2, the server device 20 is adapted to include a printing instruction receiving unit 21, an imposition information generation unit 22, a data-for-printing generation unit 23, an inspection information generation unit 24, an output unit 25, and a display control unit 26.

The printing instruction receiving unit 21 receives a printing instruction transmitted from a user and manages the received printing instruction.

One or a plurality of image data, which are data representing an image to be printed, are associated with the printing instruction received by the printing instruction receiving unit 21. Examples of the image data include portable document format (PDF) data for one page. In the following description, a unit of the image data may be referred to as a page. In addition, in a case where a plurality of image data are included in the printing instruction, the respective image data may be referred to as a first page, a second page, ... of the image data. Further, each of the image data includes one or a plurality of objects that are elements forming the image data. The object is not particularly limited, and examples of the object include an individual image, an individual figure, an individual table, an individual text, and the like that form the image data.

Further, setting information, which is information defining an aspect in which the image data are printed, is included in the printing instruction received by the printing instruction receiving unit 21. The setting information includes, for example, information on settings related to the size of a sheet to be printed, settings related to the number of copies to be printed, settings related to the imposition of image data on a sheet, and the like. These pieces of information are set by, for example, a user's input and the like via the operation display unit 14.

In the following description, among the pieces of setting information, information on settings related to the imposition of the image data on a sheet may be referred to as imposition setting information. That is, the imposition setting information is included in the printing instruction received by the printing instruction receiving unit 21. Examples of the imposition setting information include information on an arrangement order of image data to be arranged on one sheet, information on the number of pages of the image data to be arranged on one sheet, and the like.

In addition, inspection setting information that is information on a region in which an image inspection is to be performed set in each image data is included in the printing instruction received by the printing instruction receiving unit 21. In the following description, the region in which an image inspection is to be performed set in each image data may be referred to as an inspection target region. The inspection setting information is an example of first position information that is information on the positions of the image inspections set in the image data.

Further, information on the type of an image inspection or information on the accuracy of an image inspection may be included in the inspection setting information.

In the present exemplary embodiment, the printing instruction receiving unit 21 acquires the inspection setting information via a user's operation on a UI screen that is displayed on the operation display unit 14 or the like by the display control unit 26.

The inspection setting information will be described in more detail later.

The imposition information generation unit 22 generates imposition information that is information on the positions of the image data in the data for printing to be printed on a sheet on the basis of the imposition setting information included in the printing instruction received by the printing instruction receiving unit 21. The imposition information is an example of second position information. Specifically, the imposition information generation unit 22 acquires the positions of the respective image data in the data for printing in a case where the image data are imposed on the basis of information on an arrangement order of the image data to be arranged on one sheet, information on the number of pages of the image data to be arranged on one sheet, or the like that is an example of the imposition setting information, and generates the imposition information.

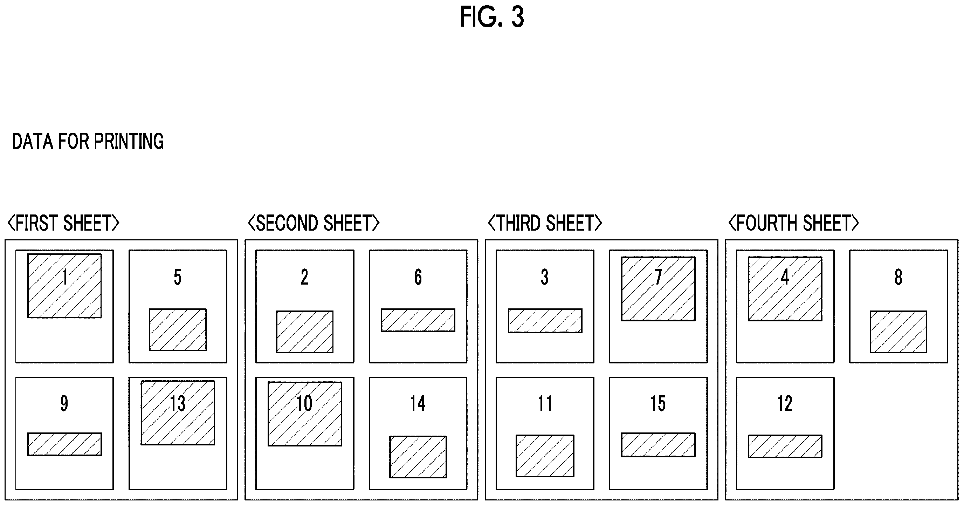

Fig. 3 is a diagram illustrating an aspect of imposition of the image data and shows an example of an arrangement order of the image data that are arranged in the data for printing by cut-and-stack. Although details will be described later, inspection target regions set in the respective image data arranged in the data for printing are shown in Fig. 3 by hatching.

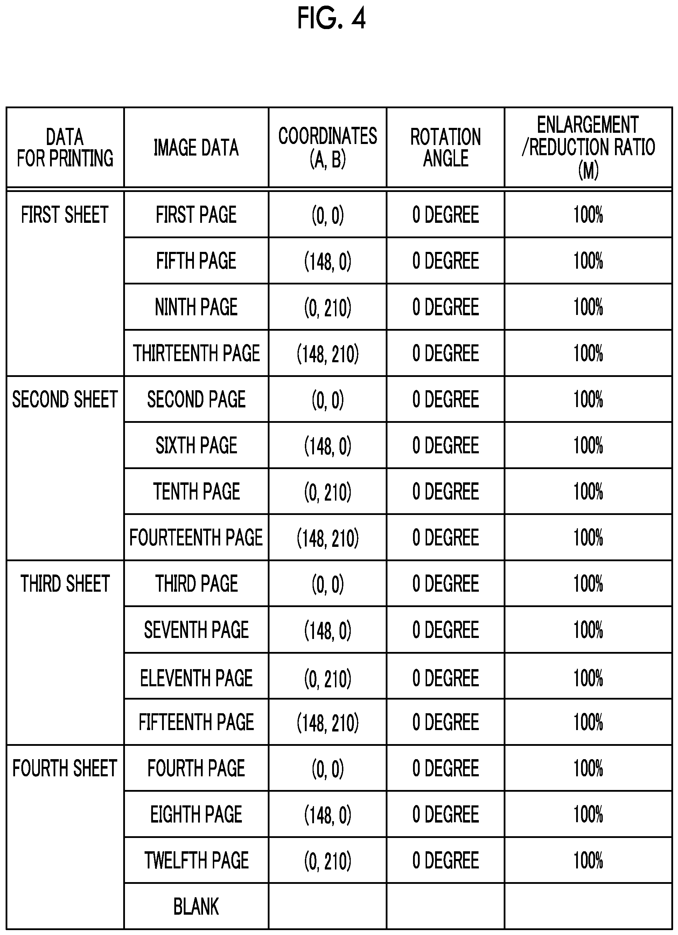

Fig. 4 is a diagram showing an example of the imposition information that is generated by the imposition information generation unit 22 in a case where the image data are imposed according to the aspect shown in Fig. 3.

An arrangement order of the image data arranged by cut-and-stack that is one of imposition methods is shown in an example shown in Fig. 3. The cut-and-stack is an imposition method including: arranging a plurality of image data to generate data for printing; overlapping and cutting printed matters on which the data for printing are printed; and stacking the cut results to arrange the printed matters in an order of pages of original image data.

Fig. 3 shows a case where image data consisting of 15 pages are arranged in data for printing, each of the data for printing is to be printed on one sheet and includes a total of four image data arranged in a form of a two-by-two matrix in vertical and horizontal directions, and cut-and-stack is performed. In Fig. 3, a numeral is a page number of each of the image data arranged in the data for printing.

In the example shown in Fig. 3, in the data for printing of a first sheet, the image data of the first page is disposed at an upper left portion, the image data of the fifth page is disposed at an upper right portion, the image data of the ninth page is disposed at a lower left portion, and the image data of the thirteenth page is disposed at a lower right portion. Further, in the data for printing of a second sheet, the image data of the second page is disposed at an upper left portion, the image data of the sixth page is disposed at an upper right portion, the image data of the tenth page is disposed at a lower left portion, and the image data of the fourteenth page is disposed at a lower right portion. Furthermore, in the data for printing of a third sheet, the image data of the third page is disposed at an upper left portion, the image data of the seventh page is disposed at an upper right portion, the image data of the eleventh page is disposed at a lower left portion, and the image data of the fifteenth page is disposed at a lower right portion. Moreover, in the data for printing of a fourth sheet, the image data of the fourth page is disposed at an upper left portion, the image data of the eighth page is disposed at an upper right portion, and the image data of the twelfth page is disposed at a lower left portion. Meanwhile, a lower right portion of the data for printing of the fourth sheet is a blank portion in which image data are not disposed.

As shown in Fig. 4, information on the page numbers of the image data arranged in the respective data for printing is included in the imposition information. Further, information on coordinates indicating the position of each of the image data in the respective data for printing is included in the imposition information. The coordinates of the imposition information indicate coordinates at which an upper left corner of each of the image data arranged in the data for printing is positioned in a case where the coordinates of the upper left portion of each of the data for printing are defined as (0, 0). In this example, the coordinates of the image data disposed at the upper left portion of the data for printing are (0, 0), the coordinates of the image data disposed at the upper right portion of the data for printing are (148, 0), the coordinates of the image data disposed at the lower left portion of the data for printing are (0, 210), and the coordinates of the image data disposed at the lower right portion of the data for printing are (148, 210).

Furthermore, angle information that is information on a rotation angle of each of the image data in the respective data for printing is included in the imposition information. In addition, an angle at which the image data are rotated in a case where the image data are disposed in the data for printing is included in the imposition information shown in Fig. 4 as the angle information. Moreover, scaling information that is information on the enlargement or reduction of each of the image data in the respective data for printing is included in the imposition information. In addition, an enlargement/reduction ratio of the image data in the data for printing is included in the imposition information shown in Fig. 4 as the scaling information.

The data-for-printing generation unit 23 generates the data for printing using the image data included in the printing instruction received by the printing instruction receiving unit 21 and the imposition information generated by the imposition information generation unit 22. The data for printing are data representing an image in which one or a plurality of image data are arranged on one side of a sheet (one page of a recording medium) on the basis of the imposition information. In the following description, a unit of the data for printing may be referred to as a sheet. In addition, in a case where there are a plurality of data for printing generated by the data-for-printing generation unit 23, the respective data for printing may be referred to as a first sheet, a second sheet, ... of the data for printing.

The data-for-printing generation unit 23 performs rasterization processing after the image data are imposed on the basis of, for example, the imposition information to generate the data for printing.

The inspection information generation unit 24 generates inspection information, which is information on a position at which an image inspection on a printed matter on which the data for printing are printed is to be performed, on the basis of the inspection setting information included in the printing instruction received by the printing instruction receiving unit 21 and the imposition information generated by the imposition information generation unit 22.

In the present exemplary embodiment, the inspection information generation unit 24 sets a region in which an image inspection on a printed matter is to be performed in the data for printing and generates inspection information on the basis of the inspection setting information and the imposition information. In the following description, the region in which an image inspection on a printed matter on which the data for printing are printed is to be performed may be referred to as an inspection region. That is, the inspection region indicates a position at which the image inspection of a printed matter on which the data for printing are printed is to be performed.

Further, in a case where information on the type of an image inspection and the accuracy of an image inspection is included in the inspection setting information, the inspection information generation unit 24 generates inspection information for each inspection region set in the data for printing in association with the type of image inspection and the accuracy of the image inspection.

The output unit 25 outputs the data for printing, which are generated by the data-for-printing generation unit 23, to the printing device 10. Further, the output unit 25 outputs the inspection information, which is generated by the inspection information generation unit 24, to the inspection device 40.

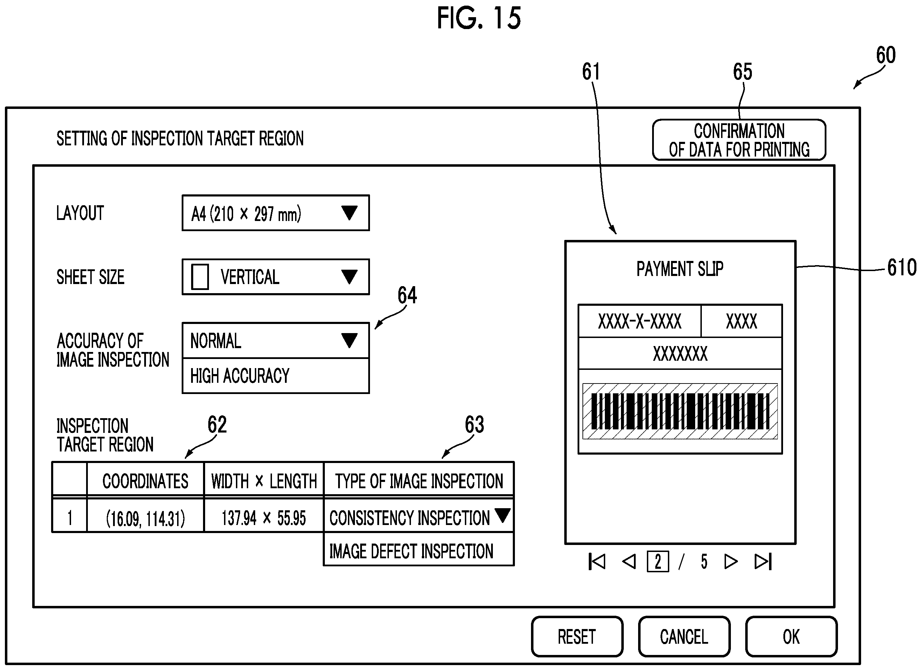

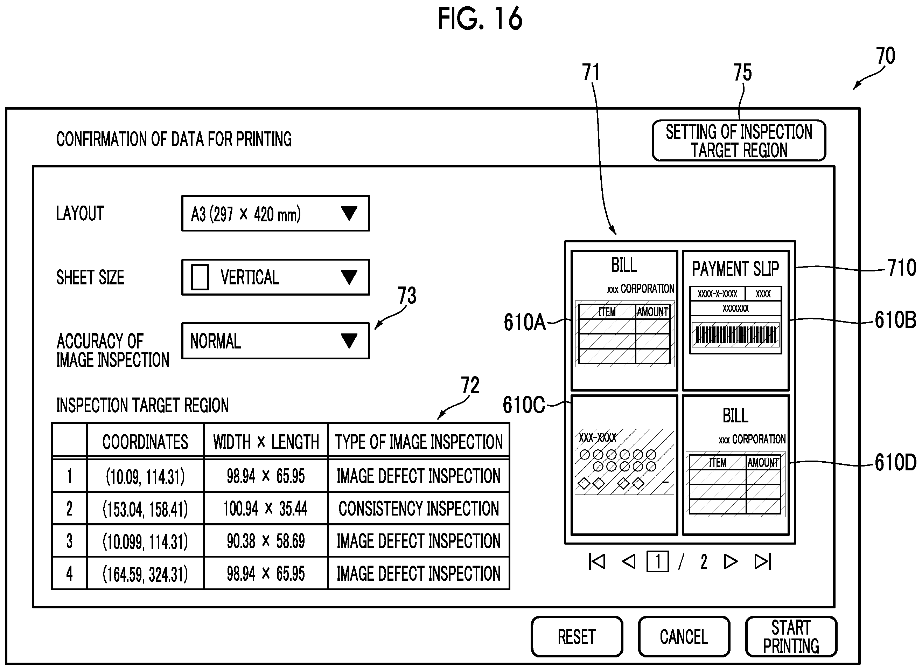

The display control unit 26 controls the display of the UI screen on the operation display unit 14. Although details will be described later, the display control unit 26 causes a setting screen (a setting screen 60 shown in Fig. 15 to be described later), which allows a user to set an inspection target region for each of the image data arranged in the data for printing, to be displayed as the UI screen. Further, the display control unit 26 causes a confirmation screen (a confirmation screen 70 shown in Fig. 16 to be described later), which allows a user to confirm the inspection information generated by the inspection information generation unit 24, to be displayed as the UI screen.

Here, each function of the server device 20 is realized by a CPU 20A as an example of a processor. The CPU 20A reads a program stored in a read only memory (ROM) 20B, and executes the program using a random access memory (RAM) 20C as a work area. The program executed by the CPU 20A may be provided to the server device 20 in a state of being stored in a computer-readable recording medium, such as a magnetic recording medium (a magnetic tape, a magnetic disk, or the like), an optical recording medium (an optical disk or the like), a magneto-optical recording medium, or a semiconductor memory. Further, the program executed by the CPU 20A may be downloaded to the server device 20 using communication means, such as the Internet.

Furthermore, each function of the server device 20 is realized by software in the present exemplary embodiment, but the present invention is not limited thereto. Each function of the server device 20 may be realized by, for example, an application specific IC (ASIC. An integrated circuit for a specific application).

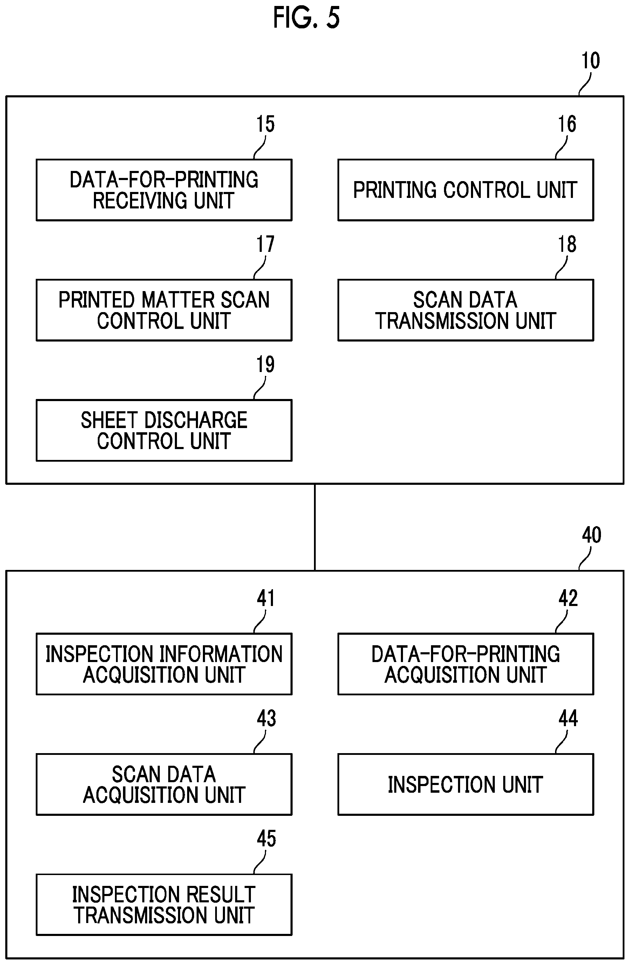

Fig. 5 is a diagram showing an example of functional blocks of the printing device 10.

As shown in Fig. 5, the printing device 10 is adapted to include a data-for-printing receiving unit 15, a printing control unit 16, a printed matter scan control unit 17, a scan data transmission unit 18, and a sheet discharge control unit 19.

Further, the inspection device 40 provided in the discharge device 13 (see Fig. 1) of the printing device 10 is to inspect an object, such as a text or an image of a printed matter printed according to a printing instruction. The inspection device 40 is adapted to include an inspection information acquisition unit 41, a data-for-printing acquisition unit 42, a scan data acquisition unit 43, an inspection unit 44, and an inspection result transmission unit 45.

The data-for-printing receiving unit 15 receives the data for printing that are generated by the data-for-printing generation unit 23 of the server device 20.

The printing control unit 16 controls the printing unit 12 that performs printing using the data for printing received by the data-for-printing receiving unit 15.

The printed matter scan control unit 17 controls a scan function of optically scanning an image of the printed matter while the printed matter printed by the printing unit 12 is being transported to the inspection device 40.

The scan data transmission unit 18 transmits the scan data, which are acquired using the scan function, to the inspection device 40.

The sheet discharge control unit 19 sorts and discharges the printed matter to either the discharge tray 13A or the discharge tray 13B according to an inspection result of the inspection device 40. Specifically, the sheet discharge control unit 19 discharges a printed matter, which has passed the inspection of the inspection device 40, from the discharge tray 13A and discharges the printed matter, which has not passed the inspection of the inspection device 40, from the discharge tray 13B.

The printing system 100 may cause the operation display unit 14 (see Fig. 1) to display the inspection result of the inspection device 40.

In the inspection device 40, the inspection information acquisition unit 41 acquires inspection information output from the output unit 25 of the server device 20. The inspection information is information generated by the inspection information generation unit 24.

The data-for-printing acquisition unit 42 acquires data for printing output from the output unit 25 of the server device 20. The data for printing are data generated by the data-for-printing generation unit 23, and one or a plurality of image data are arranged in the data for printing.

The scan data acquisition unit 43 acquires scan data transmitted from the scan data transmission unit 18 of the printing device 10. The scan data are data obtained from the scan of a printed matter on which the data for printing are printed.

The inspection unit 44 is an example of an inspection execution unit, and performs an image inspection of scan data, which are obtained from the scan of a printed matter on which the data for printing are printed, using the acquired inspection information and the acquired data for printing.

The inspection unit 44 of the present exemplary embodiment performs "image defect inspection" for inspecting a printing defect of the printed matter on which the data for printing are printed, as an example of an image inspection. That is, the inspection unit 44 specifies a position at which the image inspection is to be performed in the scan data on the basis of the inspection information. Then, the inspection unit 44 compares a region of the scan data that is specified by the inspection information with a region that corresponds to the data for printing, and determines the result of the comparison. For example, the inspection unit 44 collates the region of the scan data specified by the inspection information with the region corresponding to the data for printing in predetermined dot units to perform this comparison.

For example, in a case where the region of the scan data specified by the inspection information and the region corresponding to the data for printing all coincide with each other in dot units, the inspection unit 44 determines that the printed matter has passed the inspection. In a case where there are dots not coinciding with each other in the region of the scan data specified by the inspection information and the region corresponding to the data for printing, the inspection unit 44 determines that the printed matter has not passed the inspection. The inspection unit 44 may determine that the printed matter has passed the inspection in a case where the number of dots, which do not coincide with each other in the region of the scan data specified by the inspection information and the region corresponding to the data for printing, is smaller than a predetermined number (for example, 2), and may determine that the printed matter has not passed the inspection in a case where the number of dots described above is equal to or larger than the predetermined number.

Further, in a case where information on the accuracy of the image inspection is included in the inspection information, the inspection unit 44 may change the number of dots used to determine whether or not the printed matter has passed the inspection according to the accuracy of the image inspection.

A case where the accuracy of the image inspection includes normal accuracy and high accuracy higher than the normal accuracy is considered. In a case where the accuracy of the image inspection is high accuracy, the inspection unit 44 can reduce the number of dots used to determine whether or not the printed matter has passed the inspection as compared to a case where the accuracy of the image inspection is normal accuracy. For example, in a case where the accuracy of the image inspection is high accuracy, the inspection unit 44 determines that the printed matter has passed the inspection in a case where the region of the scan data specified by the inspection information and the region corresponding to the data for printing all coincide with each other in dot units and determines that the printed matter has not passed the inspection in a case where there are dots not coinciding with each other. On the other hand, in a case where the accuracy of the image inspection is normal accuracy, the inspection unit 44 determines that the printed matter has passed the inspection in a case where the number of dots, which do not coincide with each other in the region of the scan data specified by the inspection information and the region corresponding to the data for printing, is smaller than a predetermined number (for example, 2) and determines that the printed matter has not passed the inspection in a case where the number of dots described above is equal to or larger than the predetermined number.

Furthermore, in a case where information on the accuracy of the image inspection is included in the inspection information, the inspection unit 44 may change the density of dots, which is required to collate the region of the scan data specified by the inspection information with the region corresponding to the data for printing, according to the accuracy of the image inspection.

For example, in a case where the accuracy of the image inspection is high accuracy, the inspection unit 44 collates the region of the scan data with the region corresponding to the data for printing at 1200 dpi. On the other hand, in a case where the accuracy of the image inspection is normal accuracy, the inspection unit 44 collates the region of the scan data with the region corresponding to the data for printing at 600 dpi.

Further, the inspection unit 44 may perform the image inspection using a color difference for each pixel between the scan data and the data for printing. At this time, an allowable color difference may be changed between a case where the accuracy of the image inspection is high accuracy and in a case where the accuracy of the image inspection is normal accuracy.

The image inspection performed by the inspection unit 44 is not limited to the above-mentioned image defect inspection as long as a region specified by the inspection information is inspected on the printed matter on which the data for printing are printed.

Other examples of the image inspection performed by the inspection unit 44 include "consistency inspection" for inspecting consistency between information included in the data for printing and information included in a printed matter in a region specified by the inspection information. In addition, in a case where an object, such as an image of a bar code or a text included in image data, is set as a region in which an image inspection is to be performed in the data for printing in which the image data are arranged, the inspection unit 44 can determine consistency between information that is included in an image of a bar code or a text in the data for printing and information that is included in an image of a bar code or a text on a printed matter via consistency inspection.

The inspection result transmission unit 45 transmits information on either passing or non-passing the inspection to the printing device 10 as information indicating an inspection result of the inspection unit 44. As described above, the sheet discharge control unit 19 of the printing device 10 sorts and discharges the inspected printed matter to either the discharge tray 13A or the discharge tray 13B on the basis of the information indicating the inspection result.

Further, the inspection result transmission unit 45 transmits information that specifies the inspected printed matter, for example, information indicating which sheet of which printing instruction the inspected printed matter is, to the printing device 10. Accordingly, printing results of the printed matter can be displayed on the operation display unit 14 (see Fig. 1). Furthermore, the inspection result transmission unit 45 may notify a user at a position away from the printing device 10 of the printing results by transmitting the printing results to the server device 30 (see Fig. 1).

The server device 20 is connected to an upstream side of the printing device 10 in the configuration of the printing system 100 according to the present exemplary embodiment, but the present invention is not limited thereto. The printing device 10 may be adapted to have each function of the server device 20 (see Fig. 2).

Incidentally, in a case where the image inspection of the printed matter on which the data for printing are printed by the printing device 10 is to be performed and a region in which an image inspection is to be performed (an inspection region to be described later) is set not over the entire data for printing but in a part of the data for printing, it may be difficult to set the inspection region in the data for printing in the printing system 100 depending on the arrangement of the image data in the data for printing, or the like.

For example, in a case where the image data are arranged in the data for printing by cut-and-stack as shown in Fig. 3, the page numbers of the arranged image data and the positions of the arranged image data are different depending on the respective data for printing. In this case, a region in which an image inspection is to be performed is different for each data for printing, and a burden on a user required to set a region in which an image inspection is to be performed is likely to increase in a case where a region in which an image inspection is to be performed is to be individually set for each data for printing.

On the other hand, in the present exemplary embodiment, the inspection information generation unit 24 of the server device 20 determines a position at which an image inspection is to be performed on a printed matter on which each data for printing is printed, on the basis of the inspection setting information that is information on the position of an image inspection set in the image data and the imposition information that is information on the position of each image data in the data for printing.

Subsequently, processing performed by the inspection information generation unit 24 will be described. First, the inspection setting information used in a case where the inspection information generation unit 24 generates the inspection information will be described.

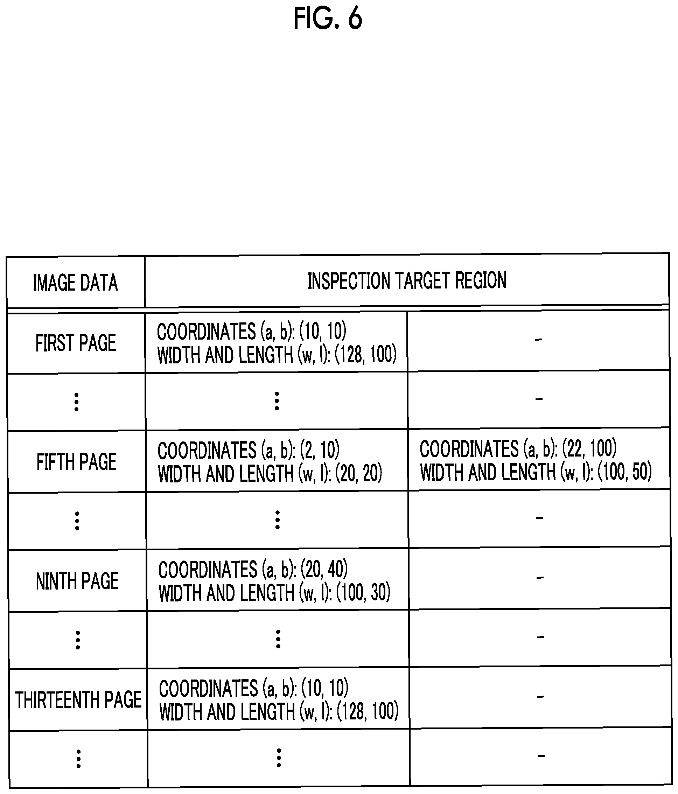

Fig. 6 is a diagram showing an example of the inspection setting information. Fig. 6 shows the inspection setting information corresponding to the inspection target regions set in the image data as shown in Fig. 3. In addition, Fig. 6 shows the inspection setting information corresponding to the inspection target regions set in the image data of the first, fifth, ninth, and thirteenth pages among the image data of the first to fifteenth pages shown in Fig. 3.

The inspection setting information is information indicating the position of the inspection target region in the image data, and is set for each image data. Although details will be described later, the printing instruction receiving unit 21 acquires the inspection setting information for each image data on the basis of a user's input and the like to the UI screen (a setting screen 60 shown in Fig. 15 to be described later) displayed on the operation display unit 14 (see Fig. 1).

In the present exemplary embodiment, the inspection setting information includes information on coordinates indicating the position of the inspection target region in each image data. The coordinates of the inspection target region included in the inspection setting information are coordinates at which an upper left point (an upper left corner in a case where the inspection target region has a rectangular shape as in the present exemplary embodiment) of the inspection target region set in the image data is positioned in a case where the coordinates of the upper left portion in each image data are defined as (0, 0).

Further, the inspection setting information includes a width in a horizontal direction and a length in a vertical direction as information on a range of the inspection target region set in each image data. In the following description, the width of the inspection target region in the horizontal direction and the length of the inspection target region in the vertical direction, which indicate the range of the inspection target region, may be simply referred to as a width and a length.

The format of the inspection setting information is not limited to the coordinates, the width, and the length as long as the position and the range of the inspection target region in each image data can be defined.

In this example, an inspection target region having coordinates (10, 10) and a width and length (120, 100) is set in the image data of the first page. In a case where a width and length (w, l) is described, w denotes the width of an inspection target region in the horizontal direction and l denotes the length of the inspection target region in the vertical direction.

Further, an inspection target region having coordinates (2, 10) and a width and length (20, 20) and an inspection target region having coordinates (22, 100) and a width and length (100, 50) are set in the image data of the fifth page.

Furthermore, an inspection target region having coordinates (20, 40) and a width and length (100, 30) is set in the image data of the ninth page.

Moreover, an inspection target region having coordinates (10, 10) and a width and length (128, 100) is set in the image data of the thirteenth page.

Next, processing of generating the inspection information with the inspection information generation unit 24 on the basis of the inspection setting information shown in Fig. 6 and the imposition information shown in Fig. 4 will be described.

The inspection information generation unit 24 of the present exemplary embodiment calculates coordinates and a range (a width in the horizontal direction, a length in the vertical direction) of an inspection region in the data for printing and generates inspection information on the basis of the inspection setting information and the imposition information.

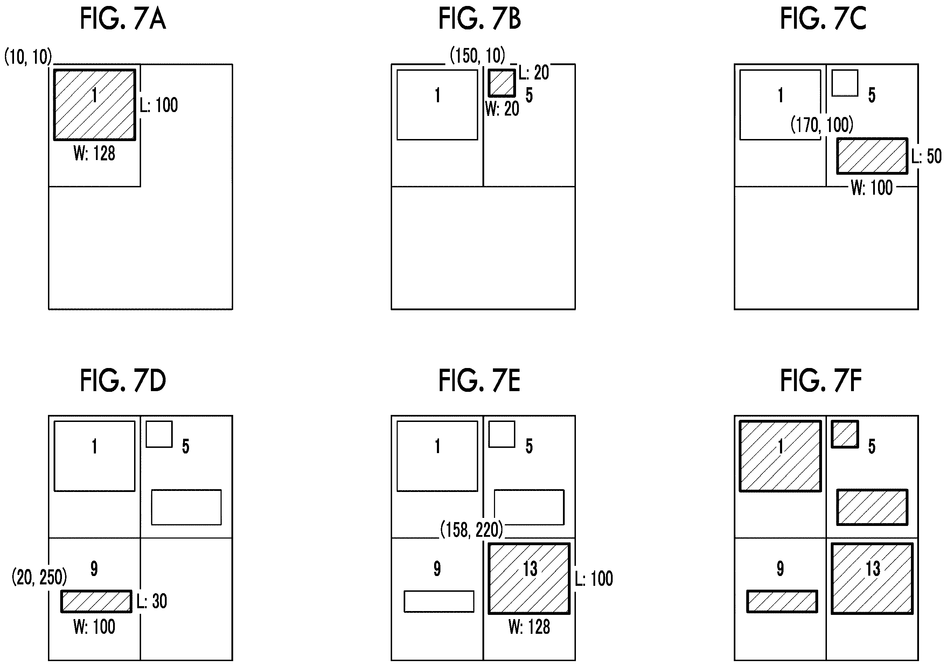

Figs. 7A to 7F are diagrams illustrating processing of generating the inspection information with the inspection information generation unit 24. The processing is performed in an order of Figs. 7A, 7B, ..., 7F by the inspection information generation unit 24.

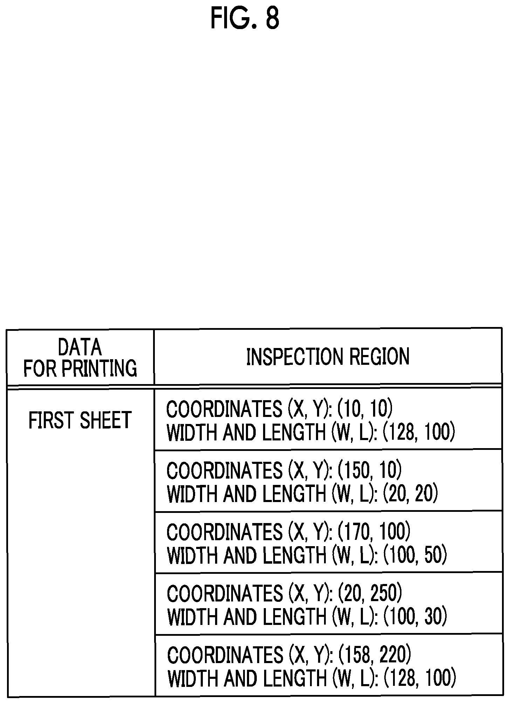

Further, Fig. 8 is a diagram showing an example of the inspection information that is generated by the inspection information generation unit 24. Fig. 8 shows an example of the inspection information generated for the data for printing of the first sheet among the plurality of data for printing in which the image data are arranged.

First, the inspection information generation unit 24 acquires the page number of the image data, which is disposed on the first sheet of the data for printing, from the imposition information. Further, the inspection information generation unit 24 acquires coordinates, which indicate a position, a rotation angle, and an enlargement/reduction ratio of the image data, which corresponds to the acquired page number, in the data for printing from the imposition information.

In this example, the inspection information generation unit 24 acquires "first page", which is disposed at the upper left portion of the data for printing, from the imposition information as the page number of the image data disposed on the first sheet of the data for printing. Further, the inspection information generation unit 24 acquires coordinates (0, 0), a rotation angle (0 degree) and an enlargement/reduction ratio (100%) of the image data of the first page in the data for printing, from the imposition information.

After that, the inspection information generation unit 24 acquires coordinates (10, 10) of an inspection target region set in the image data of the first page and a width and length (128, 100) indicating a range of the inspection target region from the inspection setting information.

Then, the inspection information generation unit 24 calculates coordinates and a range of an inspection region in the data for printing using the coordinates, the rotation angle, and the enlargement/reduction ratio of the image data of the first page in the data for printing that are acquired from the imposition information and the coordinates, the width, and the length of the inspection target region set in the image data of the first page that are acquired from the inspection setting information.

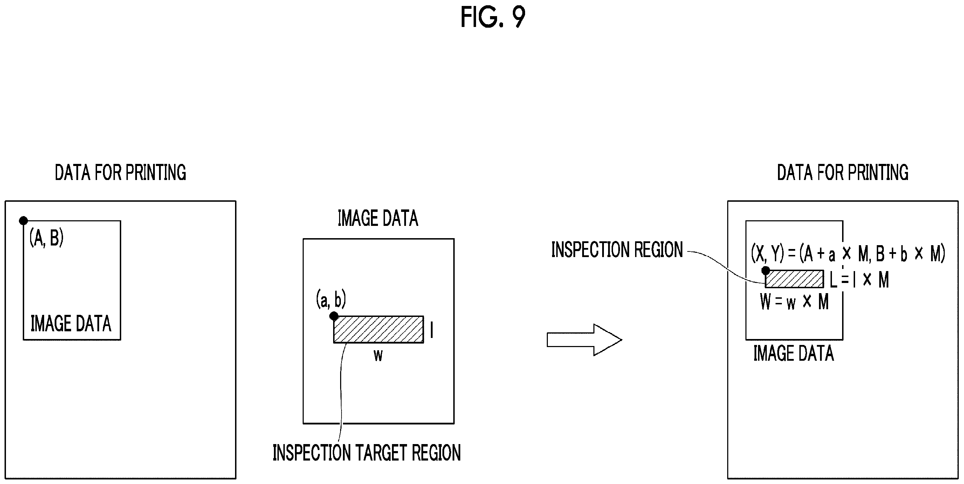

Fig. 9 is a diagram illustrating a method of calculating the coordinates, the width, and the length of an inspection region in data for printing with the inspection information generation unit 24. Fig. 9 shows a method of calculating the coordinates, the width, and the length in a case where the rotation angle of the image data disposed in the data for printing is 0 degree. Cases where the rotation angle of the image data disposed in the data for printing is not 0 degree will be described later.

Here, the coordinates of image data disposed in the data for printing are denoted by (A, B) and an enlargement/reduction ratio of the image data is denoted by M. Further, the coordinates of an inspection target region set in the image data are denoted by (a, b), the width of the inspection target region in the horizontal direction is denoted by w, and the length of the inspection target region in the vertical direction is denoted by 1.

In this case, the inspection information generation unit 24 can calculate coordinates (X, Y), a width W, and a length L of an inspection region in the data for printing from the following equations (1) and (2).

$$(X, Y) = (A + a \times M, B + b \times M) \dots (1)$$

$$(W, L) = (w \times M, l \times M) \dots (2)$$

In this example, the inspection information generation unit 24 calculates coordinates (10, 10) and a width and length (128, 100) of an inspection region in the data for printing as shown in Fig. 7A from the coordinates (0, 0) and the enlargement/reduction ratio (100%) of the image data of the first page in the data for printing and the coordinates (10, 10) and the width and length (128, 100) of the inspection target region set in the image data of the first page.

Next, the inspection information generation unit 24 acquires the next page number of the image data disposed on the first sheet of the data for printing from the imposition information. In this example, the inspection information generation unit 24 acquires "fifth page", which is disposed at the upper right portion in the data for printing, as the page number of the image data disposed on the first sheet of the data for printing. Further, the inspection information generation unit 24 acquires coordinates (148, 0), a rotation angle (0 degree), and an enlargement/reduction ratio (100%) of the image data of the fifth page in the data for printing from the imposition information.

After that, the inspection information generation unit 24 acquires coordinates, a width, and a length of an inspection target region set in the image data of the fifth page. Then, the inspection information generation unit 24 calculates coordinates, a width, and a length of an inspection region in the data for printing from the above-mentioned equations (1) and (2) in a manner identical to the case of the image data of the first page.

As shown in Fig. 6, two inspection target regions are set in the image data of the fifth page. Accordingly, the inspection information generation unit 24 calculates coordinates, a width, and a length of an inspection region in the data for printing for each inspection target region set in the image data of the fifth page.

In this example, the inspection information generation unit 24 calculates coordinates (150, 10) and a width and length (20, 20) of an inspection region in the data for printing as shown in Fig. 7B from the coordinates (148, 0) and the enlargement/reduction ratio (100%) of the image data of the fifth page in the data for printing and the coordinates (2, 10) and the width and length (20, 20) of the first inspection target region set in the image data of the fifth page. Likewise, the inspection information generation unit 24 calculates coordinates (170, 100) and a width and length (100, 50) of an inspection region in the data for printing as shown in Fig. 7C from the coordinates (148, 0) and the enlargement/reduction ratio (100%) of the image data of the fifth page in the data for printing and the coordinates (22, 100) and the width and length (100, 50) of the second inspection target region set in the image data of the fifth page.

Next, the inspection information generation unit 24 calculates coordinates and ranges of inspection regions in the data for printing in a manner identical to the above-mentioned manner even for the image data of the ninth and thirteenth pages arranged on the first sheet of the data for printing using the coordinates, the rotation angle, and the enlargement/reduction ratio of the image data in the data for printing that are acquired from the imposition information and the coordinates, the width, and the length of the inspection target region set in the image data that are acquired from the inspection setting information.

In this example, the inspection information generation unit 24 calculates coordinates (20, 250) and a width and length (100, 30) of an inspection region in the data for printing that corresponds to the inspection target region set in the image data of the ninth page disposed in the data for printing as shown in Fig. 7D.

Further, the inspection information generation unit 24 calculates coordinates (158, 220) and a width and length (120, 100) of an inspection region in the data for printing that corresponds to the inspection target region set in the image data of the thirteenth page disposed in the data for printing as shown in Fig. 7E.

Then, the output unit 25 of the server device 20 outputs inspection information, which includes the coordinates, the widths, and the lengths of the inspection regions calculated for the data for printing of the first sheet by the inspection information generation unit 24, to the inspection device 40.

On the basis of the acquired inspection information, the inspection device 40 performs the image inspection of a printed matter, on which the data for printing are printed, in the inspection regions set in the data for printing.

Further, the inspection information generation unit 24 generates inspection information of the data for printing of the first sheet, and then generates inspection information of the data for printing of the second, third, and fourth sheets in order in a manner identical to the case of the inspection information of the data for printing of the first sheet. In addition, the inspection information generation unit 24 calculates coordinates, widths, and lengths of inspection regions in the data for printing that correspond to inspection target regions set in the respective image data arranged in the data for printing of the second, third, and fourth sheets.

Then, the output unit 25 of the server device 20 outputs inspection information, which includes the coordinates, the widths, and the lengths of the inspection regions calculated for the data for printing of the second, third, and fourth sheets by the inspection information generation unit 24, to the inspection device 40 in order.

On the basis of the acquired inspection information, the inspection device 40 performs the image inspection of a printed matter, on which the data for printing are printed, in the inspection regions set in the data for printing.

Subsequently, a method of calculating coordinates, a width, and a length of an inspection region in the data for printing with the inspection information generation unit 24 in a case where the rotation angle of the image data disposed in the data for printing in the imposition information is not 0 degree will be described.

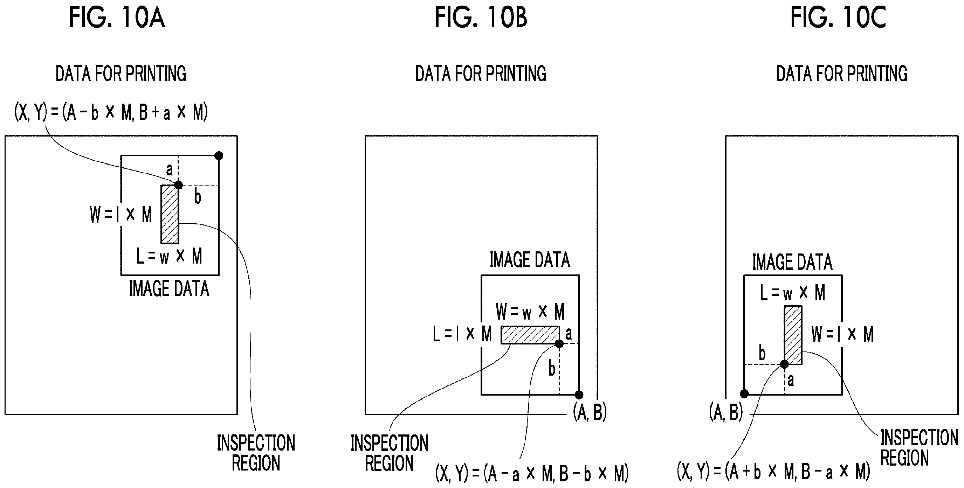

Figs. 10A to 10C are diagrams illustrating the method of calculating coordinates, a width, and a length of an inspection region in the data for printing with the inspection information generation unit 24. Fig. 10A shows a case where the rotation angle of the image data is 90 degrees, Fig. 10B shows a case where the rotation angle of the image data is 180 degrees, and Fig. 10C shows a case where the rotation angle of the image data is 270 degrees.

Here as well, as in the above description, the coordinates of image data disposed in the data for printing are denoted by (A, B) and an enlargement/reduction ratio of the image data is denoted by M. Further, the coordinates of an inspection target region set in the image data are denoted by (a, b), the width of the inspection target region in the horizontal direction is denoted by w, and the length of the inspection target region in the vertical direction is denoted by 1.

In a case where the rotation angle of the image data disposed in the data for printing is 90 degrees as shown in Fig. 10A, the inspection information generation unit 24 can calculate coordinates (X, Y), a width W, and a length L of an inspection region in the data for printing from the following equations (3) and (4).

$$(X, Y) = (A - b \times M, B + a \times M) \ldots (3)$$

$$(W, L) = (1 \times M, w \times M) \ldots (4)$$

Further, in a case where the rotation angle of the image data disposed in the data for printing is 180 degrees as shown in Fig. 10B, the inspection information generation unit 24 can calculate coordinates (X, Y), a width W, and a length L of an inspection region in the data for printing from the following equations (5) and (6).

$$(X, Y) = (A - a \times M, B - b \times M) \ldots (5)$$

$$(W, L) = (w \times M, 1 \times M) \ldots (6)$$

Furthermore, in a case where the rotation angle of the image data disposed in the data for printing is 270 degrees as shown in Fig. 10C, the inspection information generation unit 24 can calculate coordinates (X, Y), a width W, and a length L of an inspection region in the data for printing from the following equations (7) and (8).

$$(X, Y) = (A + b \times M, B - a \times M) \ldots (7)$$

$$(W, L) = (1 \times M, w \times M) \ldots (8)$$

Subsequently, inspection information generated by the inspection information generation unit 24 in a case where image data of which a rotation angle is not 0 degree are included in the image data arranged in the data for printing in the imposition information will be described.

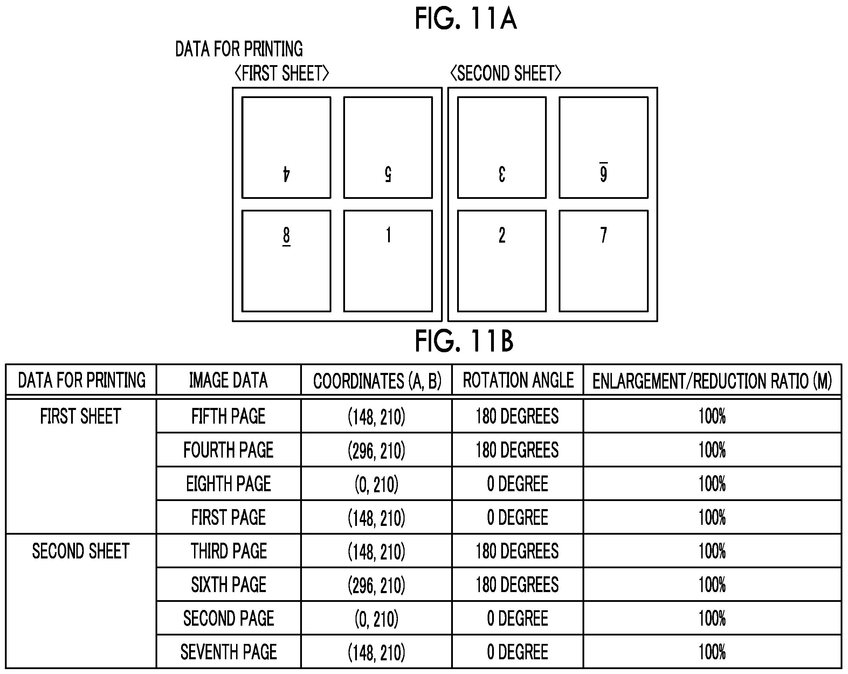

Figs. 11A to 13B are diagrams illustrating other examples of the processing of generating inspection information with the inspection information generation unit 24.

Fig. 11A is a diagram showing an example of an arrangement order of the image data arranged in the data for printing, and Fig. 11B is a diagram showing an example of imposition information that is generated by the imposition information generation unit 22 in a case where the image data are imposed according to an aspect shown in Fig. 11A. In Fig. 11A, numerals are page numbers of the image data arranged in the data for printing. Further, orientations of the numerals shown in Fig. 11A correspond to orientations in which the image data are arranged in the data for printing.

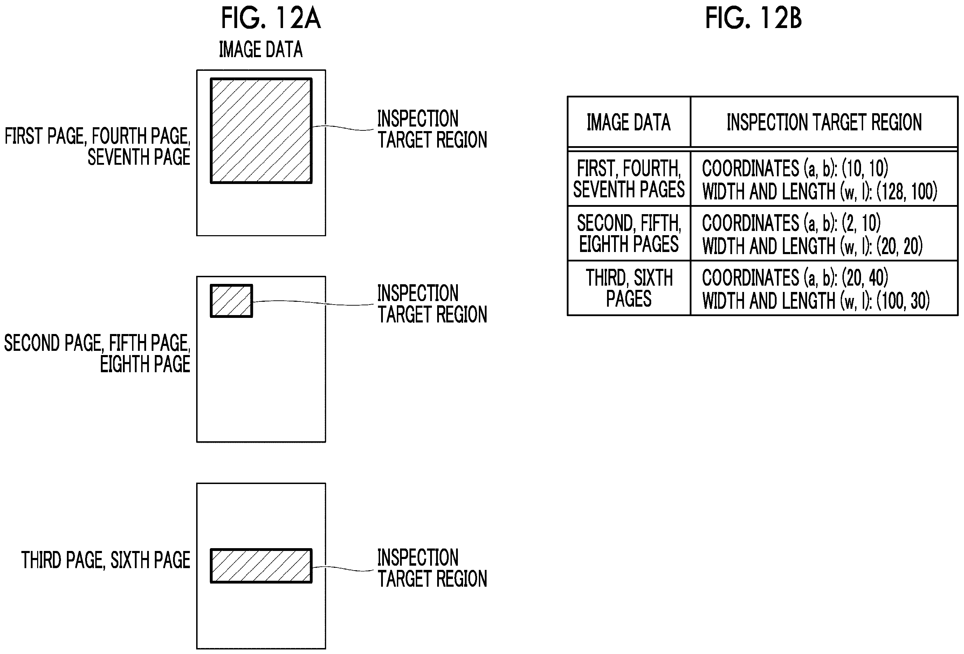

Fig. 12A is a diagram showing inspection target regions set in the respective image data, and Fig. 12B is a diagram showing an example of inspection setting information corresponding to the inspection target regions shown in Fig. 12A. In the example shown in Figs. 12A and 12B, the inspection target regions are set at an identical position in the image data of the first, fourth, and seventh pages. Likewise, the inspection target regions are set at an identical position in the image data of the second, fifth, and eighth pages, and the inspection target regions are set at an identical position in the image data of the third and sixth pages.

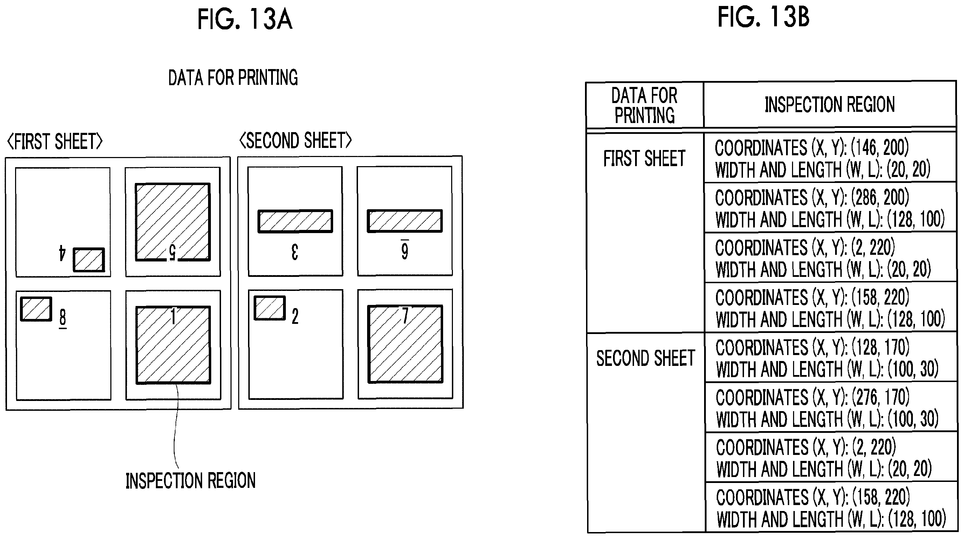

Further, Fig. 13A is a diagram showing positions of inspection regions set in the data for printing, and Fig. 13B is a diagram showing an example of inspection information generated by the inspection information generation unit 24.

An arrangement order of the image data in saddle stitch binding, which is one of imposition methods, is shown in the example shown in Fig. 11A. The saddle stitch binding is an imposition method including: arranging a plurality of image data to generate data for printing; cutting printed matters on which the data for printing are printed as necessary, overlapping the printed matters, and folding the printed matters in half from the middle; and binding the folded portions to be capable of bookbinding the printed matters.

Fig. 11A shows a case where image data consisting of 8 pages are arranged in data for printing to be printed on the surface and the back of a sheet, respectively, each of the data for printing includes a total of four image data arranged in a form of a two-by-two matrix in vertical and horizontal directions, and saddle stitch binding is performed.

More specifically, in Fig. 11A, in the data for printing of a first sheet to be printed on the surface of the sheet, the image data of the fourth page is disposed at an upper left portion, the image data of the fifth page is disposed at an upper right portion, the image data of the eighth page is disposed at a lower left portion, and the image data of the first page is disposed at a lower right portion. Further, the image data of the fifth and fourth pages are rotated by 180 degrees and arranged in the data for printing. Furthermore, in Fig. 11A, in the data for printing of a second sheet to be printed on the back of the sheet, the image data of the third page is disposed at an upper left portion, the image data of the sixth page is disposed at an upper right portion, the image data of the second page is disposed at a lower left portion, and the image data of the seventh page is disposed at a lower right portion. Furthermore, the image data of the third and sixth pages are rotated by 180 degrees and arranged in the data for printing.

Then, as shown in Fig. 11B, the rotation angles of the image data of the fifth, fourth, third, and sixth pages, which are rotated by 180 degrees and arranged in the data for printing, are set to 180 degrees in the imposition information generated by the imposition information generation unit 22.

In this example, the inspection information generation unit 24 sets inspection regions in the respective data for printing as shown in Fig. 13A and generates the inspection information shown in Fig. 13B on the basis of the imposition information shown in Fig. 11B and the inspection setting information shown in Fig. 12B.

In addition, the inspection information generation unit 24 calculates coordinates (X, Y), widths W, and lengths L of the inspection regions in the data for printing using equations corresponding to the rotation angles of the image data included in the imposition information shown in Fig. 11B. In this example, the inspection information generation unit 24 calculates coordinates (X, Y), widths W, and lengths L of the inspection regions in the data for printing, which correspond to the inspection target regions set in the image data of the eighth, first, second, and seventh pages having a rotation angle of 0 degree, using the above-mentioned equations (1) and (2). Further, the inspection information generation unit 24 calculates coordinates (X, Y), widths W, and lengths L of the inspection regions in the data for printing, which correspond to the inspection target regions set in the image data of the fifth, fourth, third, and sixth pages having a rotation angle of 180 degrees, using the above-mentioned equations (5) and (6).

Here, in a case where image data of which a rotation angle is not 0 degree are included in the image data arranged in the data for printing, an orientation of single image data and orientations of the image data arranged in the data for printing are different from each other. In this case, in a case where inspection regions are to be set in the data for printing in which the image data are arranged, it may be difficult to set an inspection region at a position in the image data where a user intends to perform an image inspection. In this case, a burden on a user in a case where an image inspection is to be performed on a printed matter on which the data for printing are printed is likely to increase.

On the other hand, in the present exemplary embodiment, the inspection regions are set in the data for printing on the basis of the inspection target region on the positions of the image inspections set in the image data and the imposition information on the positions of the image data in the data for printing. Accordingly, even in a case where image data of which a rotation angle is not 0 degree are included in the image data arranged in the data for printing, it is easy to set an inspection region at a position in the image data where a user intends to perform an image inspection. Further, it is possible to reduce a burden on a user in a case where an image inspection is to be performed on a printed matter on which the data for printing are printed.

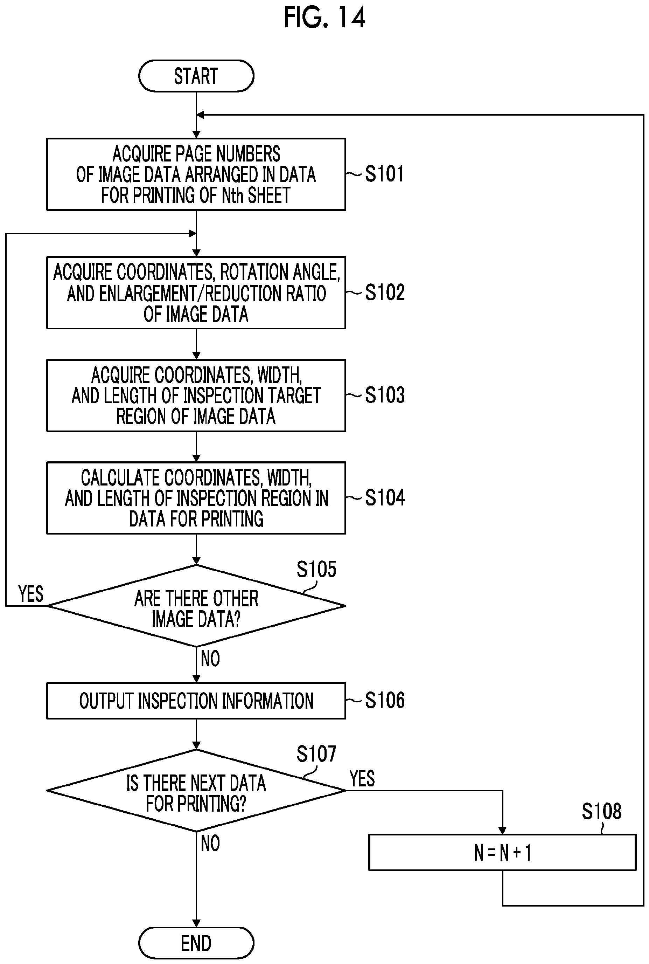

Fig. 14 is a flowchart showing a procedure of processing of setting an inspection region in the data for printing with the server device 20 to which the present exemplary embodiment is applied.

In a case where a printing instruction to print an image on a sheet is given and an inspection target region is set in the image data included in the printing instruction, the server device 20 sets an inspection region in the data for printing in which the image data are disposed according to the procedure shown in Fig. 14. Then, the inspection device 40 performs the image inspection of a printed matter, on which the data for printing are printed, in the inspection region set in the data for printing.

The processing shown in Fig. 14 is performed by mostly the inspection information generation unit 24 of the server device 20.

First, the inspection information generation unit 24 acquires page numbers of image data arranged in data for printing of an Nth sheet (N = 1) on the basis of imposition information generated by the imposition information generation unit 22 (Step S101).

After that, the inspection information generation unit 24 acquires coordinates, a rotation angle, and an enlargement/reduction ratio of target image data in the data for printing from the imposition information of first image data (hereinafter, referred to as target image data) among the image data arranged in the data for printing of the Nth sheet (Step S 102).

Then, the inspection information generation unit 24 acquires coordinates, a width, and a length of an inspection target region, which is set in the target image data, from inspection setting information received by the printing instruction receiving unit 21 (Step S103).

Next, the inspection information generation unit 24 calculates coordinates, a width, and a length of an inspection region in the data for printing, which is set to correspond to the inspection target region of the target image data, on the basis of the coordinates, the rotation angle, and the enlargement/reduction ratio of the target image data in the data for printing that are acquired in Step S 102 and the coordinates, the width, and the length of the inspection target region set in the target image data that are acquired in Step S103 (Step S104).

In a case where a plurality of inspection target regions are set in the target image data, the inspection information generation unit 24 repeatedly performs processing of Step S103 and Step S 104 for each inspection target region. Accordingly, coordinates, a width, and a length of the inspection region in the data for printing are calculated for each inspection target region.

After the coordinates, the width, and the length of the inspection region in the data for printing are calculated for all the inspection target regions included in the target image data, the inspection information generation unit 24 determines whether or not other image data of which coordinates, widths, and lengths of inspection regions are not calculated are present in the image data arranged in the data for printing of the Nth sheet (Step S 105).

In a case where other image data of which coordinates, widths, and lengths of inspection regions are not calculated are present in the image data arranged in the data for printing of the Nth sheet (YES in Step S105), the inspection information generation unit 24 returns to Step S 102 and continues to perform the processing with the other image data as the target image data.

On the other hand, in a case where other image data of which coordinates, widths, and lengths of inspection regions are not calculated are not present in the image data arranged in the data for printing of the Nth sheet (NO in Step S105), the output unit 25 outputs the coordinates, the width, and the length of the inspection region in the data for printing of the Nth sheet, which are calculated in Step S104, to the inspection device 40 as inspection information of the data for printing of the Nth sheet (Step S 106).

In the inspection device 40, the image inspection of a printed matter, on which the data for printing are printed, is performed in the inspection region set in the data for printing of the Nth sheet on the basis of the inspection information of the data for printing of the Nth sheet that is output in Step S106.

Then, the inspection information generation unit 24 determines whether or not the next data for printing (data for printing of a (N + 1)th sheet) are present in the printing instruction (Step S107).

In a case where the next data for printing are present (YES in Step S107), the inspection information generation unit 24 uses N + 1 instead of N (Step S 108), returns to Step S101, and continues to perform processing related to the next data for printing.

On the other hand, in a case where the next data for printing are not present (NO in Step S107), the inspection information generation unit 24 ends a series of processing.

As described above, in the printing system 100 according to the present exemplary embodiment, in a case where inspection regions are set in a plurality of data for printing and an image inspection is performed by the inspection device 40, the server device 20 outputs inspection information on inspection regions set in one of the plurality of data for printing to the inspection device 40 and performs processing of setting inspection regions in the other data for printing different from the one of the data for printing after the image inspection of a printed matter using the one of the data for printing is started by the inspection device 40.

Accordingly, the image inspection of a printed matter using one of the data for printing performed by the inspection device 40 and processing of setting inspection regions in the other data for printing performed by the server device 20 can be performed in parallel in the printing system 100 according to the present exemplary embodiment. As a result, a period until the image inspection of a printed matter using a plurality of data for printing is completed can be shortened as compared to a case where the image inspection of a printed matter performed by the inspection device 40 is started after all processing of setting inspection regions in a plurality of data for printing ends.

Although not shown, in a case where inspection regions are set in a plurality of data for printing and an image inspection is performed by the inspection device 40 in the printing system 100, the server device 20 may collectively output inspection information on the inspection regions set in the plurality of data for printing to the inspection device 40 after all the processing of setting inspection regions in the plurality of data for printing ends. In this case, since the number of times of processing of outputting the inspection information to the inspection device 40 performed by the server device 20 is reduced as compared to a case where inspection information on the respective data for printing is individually output to the inspection device 40, the processing performed by the server device 20 is simplified.

Subsequently, the UI screen displayed by the display control unit 26 will be described. As described above, the display control unit 26 causes the operation display unit 14 to display the UI screen on which the user operates.

Fig. 15 is a diagram showing an example of a setting screen 60 that is one of UI screens displayed by the display control unit 26 and is used to set the inspection target region for each of image data arranged in data for printing.

Fig. 16 is a diagram showing an example of a confirmation screen 70 that is one of UI screens displayed by the display control unit 26 and is used to confirm the position of the inspection region set in the data for printing by the inspection information generation unit 24.

As shown in Fig. 15, the setting screen 60 includes an image data display section 61 in which the image data (here, denoted by reference numeral 610) are displayed. In this example, the image data are displayed one page at a time in the image data display section 61 in a case where there are a plurality of image data.

Then, the printing instruction receiving unit 21 receives a designation related to a position in the image data 610 where an image inspection is to be performed in response to a user's operation on the image data 610 displayed in the image data display section 61, and acquires inspection setting information that is an example of first position information.

Specifically, the printing instruction receiving unit 21 receives a designation related to the position of an inspection target region in the image data 610 via a user's operation on the image data 610 displayed in the image data display section 61, and acquires coordinates, a width, and a length of the inspection target region set in the image data 610. Further, the printing instruction receiving unit 21 acquires coordinates, a width, and a length of the inspection target region set in the image data 610 for each of the image data 610 that are displayed one page at a time in the image data display section 61.

In the image data display section 61 shown in Fig. 15, the inspection target region set in the image data 610 in response to a user's operation is shown by hatching.

For example, a user designates a range in which an image inspection is to be performed in the image data 610 displayed in the image data display section 61. The printing instruction receiving unit 21 acquires the coordinates, the width, and the length of the inspection target region on the basis of the range that is designated in the image data 610 by the user.

Further, a user selects an object, which is to be subjected to an image inspection, among objects included in the image data 610 displayed in the image data display section 61. In the example shown in Fig. 15, an image of a bar code is selected as an object included in the image data 610. The printing instruction receiving unit 21 acquires the coordinates, the width, and the length of an inspection target region with an object, which is selected in the image data 610 by a user, as the inspection target region.

Furthermore, a user may designate an inspection exclusion range, which is a region in which an image inspection is not to be performed, in the image data 610 displayed in the image data display section 61. In this case, the printing instruction receiving unit 21 acquires the coordinates, the width, and the length of an inspection target region with a region, which excludes the inspection exclusion range designated in the image data 610 by a user, as the inspection target region.

Moreover, a user may select an object, which is not to be subjected to an image inspection, among objects included in the image data 610 displayed in the image data display section 61. In this case, the printing instruction receiving unit 21 acquires the coordinates, the widths, and the lengths of inspection target regions with objects other than the object, which is selected in the image data 610 by a user, as the inspection target regions.

Further, the setting screen 60 includes an inspection target region display section 62 that displays information on an inspection target region set in the image data 610 in response to a user's operation on the image data 610 of the image data display section 61. In this example, the coordinates, the width, and the length of the inspection target region set in the image data 610 are displayed in the inspection target region display section 62.

Furthermore, the setting screen 60 includes a type designation section 63 in which the type of an image inspection to be performed in the inspection target region set in the image data 610 is to be designated. The type designation section 63 is adapted such that, for example, "image defect inspection" for inspecting a printing defect of a printed matter on which the data for printing are printed or "consistency inspection" for inspecting consistency between information included in the data for printing and information included in a printed matter can be selected as the type of an image inspection. In addition, the type designation section 63 is formed of, for example, a pull-down menu in which either "image defect inspection" or "consistency inspection" can be selected.

In this example, the type of an image inspection can be individually set for each inspection target region set in the image data 610 by a designation in the type designation section 63.

The printing instruction receiving unit 21 acquires information on the type of an image inspection for the inspection target region of the image data 610 in response to a user's operation in the type designation section 63.

Further, the setting screen 60 includes an accuracy designation section 64 in which the accuracy of an image inspection for an inspection region to be set in the data for printing is designated depending on the inspection target region set in the image data 610. The accuracy designation section 64 is formed of, for example, a pull-down menu in which either "normal" or "high accuracy" can be selected as the accuracy of an image inspection.

In this example, the accuracy of an image inspection can be collectively set for all the inspection target regions set in the image data 610 by a designation in the accuracy designation section 64. The accuracy of an image inspection may be individually set for each inspection target region set in the image data 610 by a designation in the accuracy designation section 64.

The printing instruction receiving unit 21 acquires information on the accuracy of an image inspection for the inspection target region of the image data 610 in response to a user's operation in the accuracy designation section 64.

Furthermore, the setting screen 60 includes a switching button 65 that is used to switch the UI screen displayed on the operation display unit 14 from the setting screen 60 to the confirmation screen 70.

In the present exemplary embodiment, a user operates the switching button 65 of the setting screen 60, so that the UI screen displayed on the operation display unit 14 is switched from the setting screen 60 shown in Fig. 15 to the confirmation screen 70 shown in Fig. 16.

As shown in Fig. 16, the confirmation screen 70 includes a data-for-printing display section 71 in which data for printing (here, denoted by reference numeral 710) on which the image data 610 (see Fig. 15) are imposed are displayed. For example, the data 710 for printing on which the image data 610 are imposed are displayed one page at a time in the data-for-printing display section 71. In the example shown in Fig. 16, the data 710 for printing on which image data 610A, 610B, 610C, and 610D of four pages are imposed are displayed in the data-for-printing display section 71.

As described above, inspection information is generated in the data 710 for printing by the inspection information generation unit 24 on the basis of inspection setting information set in the image data 610. Inspection regions set in the data 710 for printing on the basis of the inspection information generated by the inspection information generation unit 24 are shown in the data-for-printing display section 71. In the data-for-printing display section 71 shown in Fig. 16, the inspection regions set in the data for printing are shown by hatching.

A user can confirm regions in which an image inspection is to be performed on a printed matter on which the data 710 for printing are printed by looking at the data-for-printing display section 71 of the confirmation screen 70. The confirmation screen 70 is an example of a display screen on which the data 710 for printing and inspection regions, which are positions at which the image inspection of a printed matter on which the data 710 for printing are printed is to be performed, are displayed together.

Further, the inspection information generation unit 24 may set inspection regions in the data 710 for printing in response to a user's operation on the data 710 for printing displayed in the data-for-printing display section 71. In addition, the inspection information generation unit 24 receives the settings of coordinates, widths, and lengths of the inspection regions in response to a user's operation on the data 710 for printing displayed in the data-for-printing display section 71. Then, the inspection information generation unit 24 changes the coordinates, the widths, and the lengths of the inspection regions according to the received settings of coordinates, widths, and lengths of the inspection regions. In a case where the inspection regions are changed, changed inspection regions are displayed in the data-for-printing display section 71 on the confirmation screen 70. Accordingly, a user can confirm the positions of the changed inspection regions in the data 710 for printing by looking at the data-for-printing display section 71 of the confirmation screen 70.

Furthermore, the confirmation screen 70 includes an inspection region display section 72 in which information on the inspection regions set in the data 710 for printing is displayed. In this example, the coordinates, the widths, and the lengths of the inspection regions set in the data 710 for printing are displayed in the inspection region display section 72. Moreover, information on the type of an image inspection set for each of the inspection regions is displayed in the inspection region display section 72.

The inspection information generation unit 24 may set inspection regions in the data 710 for printing in response to a user's operation in the inspection region display section 72 of the confirmation screen 70.

Moreover, the confirmation screen 70 includes an accuracy display section 73 in which information on the accuracy of an image inspection for each of the inspection regions set in the data 710 for printing is displayed. In the present exemplary embodiment, the accuracy of an image inspection is collectively set for all the inspection target regions set in the image data 610. As a result, an identical accuracy of an image inspection is set for the inspection regions of the data 710 for printing. In the example shown in Fig. 16, "normal" is displayed in the accuracy display section 73 as the accuracy of an image inspection collectively set for all the inspection regions of the data 710 for printing.

Further, the confirmation screen 70 includes a switching button 75 that is used to switch the UI screen displayed on the operation display unit 14 from the confirmation screen 70 to the setting screen 60.

In the present exemplary embodiment, a user operates the switching button 75 of the confirmation screen 70, so that the UI screen displayed on the operation display unit 14 is switched from the confirmation screen 70 shown in Fig. 16 to the setting screen 60 shown in Fig. 15.

For example, a user confirms the inspection regions set in the data 710 for printing on the confirmation screen 70 and then operates the switching button 75 to display the setting screen 60, so that the user can confirm and change inspection target regions set in the image data 610 arranged in the data 710 for printing.

In the server device 20 of the present exemplary embodiment, the inspection information generation unit 24 sets the inspection regions, in which the image inspection of a printed matter on which the data for printing are printed is to be performed, in the data for printing. However, the present invention is not limited thereto. The server device 20 may be capable of specifying regions in which an image inspection is to be performed on a printed matter on the basis of the inspection target regions set in the image data. For example, the server device 20 may set inspection regions on a printed matter on which the data for printing are printed or in the scan data of a printed matter on which the data for printing are printed.

Although the exemplary embodiments of the present invention have been described above, a technical scope of the present invention is not limited to the scope described in the above-mentioned exemplary embodiments. It is apparent from claims that exemplary embodiments in which various modifications or improvements are added to the above-mentioned exemplary embodiments are also included in the technical scope of the present invention.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

<Supplementary Note>

(((1))) An image inspection system comprising:

a processor; and
an inspection execution unit that performs an image inspection of a printed matter,
wherein the processor is configured to:

acquire first position information that is information on a position of the image inspection set in image data; and
acquire second position information that is information on positions of the respective image data in data for printing in which the plurality of image data are arranged, and

the inspection execution unit performs the image inspection of a printed matter on which the data for printing are printed using the first position information and the second position information.

(((2))) The image inspection system according to (((1))), wherein the processor is configured to:

acquire angle information that is information on rotation angles of the image data in the data for printing; and
perform the image inspection of the printed matter using the angle information.

((((3)))) The image inspection system according to (((1))) or (((2))), wherein the processor is configured to:

acquire scaling information that is information on enlargement or reduction of the image data in the data for printing; and
perform the image inspection of the printed matter using the scaling information.

((((4)))) The image inspection system according to any one of (((1))) to (((3))), wherein the processor is configured to:
receive a designation related to a position of the image inspection for each of the image data; and acquire the first position information.

((((5)))) The image inspection system according to (((4))), wherein the processor is configured to:
receive a designation of a region in which the image inspection is to be performed or a region in which the image inspection is not to be performed for each of the image data as the designation related to the position of the image inspection; and acquire the first position information.

(((6))) The image inspection system according to (((4))), wherein the processor is configured to:
receive a selection of an object to be subjected to the image inspection or an object not to be subjected to the image inspection for each of the image data among objects forming the image data as the designation related to the position of the image inspection; and acquire the first position information.

(((7))) The image inspection system according to (((4))), wherein the processor is configured to:
acquire information on at least one of a type of the image inspection or accuracy of the image inspection together with the designation related to the position of the image inspection.

(((8))) The image inspection system according to any one of (((1))) to (((7))), wherein the processor is configured to:

set inspection regions in which the image inspection of the printed matter on which the data for printing are printed is to be performed using the first position information and the second position information; and

output the inspection region set in one of the plurality of data for printing to the inspection execution unit and set the inspection regions in the other data for printing different from the one of the data for printing after the image inspection of a printed matter using the one of the data for printing is started by the inspection execution unit, in a case where the inspection regions are set in the plurality of data for printing.

(((9))) The image inspection system according to any one of (((1))) to (((7))), wherein the processor is configured to:

set inspection regions in which the image inspection of the printed matter on which the data for printing are printed is to be performed using the first position information and the second position information; and

collectively output the inspection regions, which are set in the plurality of data for printing, to the inspection execution unit, in a case where the inspection regions are set in the plurality of data for printing.

(((10))) The image inspection system according to any one of (((1))) to (((9))), further comprising:

a display unit that displays information on the image inspection,

wherein the processor is configured to:

cause the display unit to display a display screen on which the data for printing and positions at which the image inspection of the printed matter on which the data for printing are printed is to be performed are displayed together.

(((11))) The image inspection system according to (((10))), wherein the processor is configured to: receive settings of positions in the data for printing at which the image inspection is to be performed via the display screen displayed on the display unit.

(((12))) The image inspection system according to (((11))), wherein the processor is configured to: apply the settings of the positions at which the image inspection is to be performed to the position of the image inspection set in the image data that are arranged in the data for printing, in a case where the processor receives the settings of the positions in the data for printing at which the image inspection is to be performed.

(((13))) An information processing apparatus comprising:

a processor,

wherein the processor is configured to:

acquire first position information that is information on a position of an image inspection set in image data;

acquire second position information that is information on positions of the respective image data in data for printing in which the plurality of image data are arranged; and

determine positions at which the image inspection is to be performed on a printed matter on which the data for printing are printed using the first position information and the second position information.

(((14))) A program causing a computer to realize:

a function of acquiring first position information that is information on a position of an image inspection set in image data;

a function of acquiring second position information that is information on positions of the respective image data in data for printing in which the plurality of image data are arranged; and

a function of determining positions at which the image inspection is to be performed on a printed matter on which the data for printing are printed using the first position information and the second position information.

According to the image inspection system of (((1))), it is possible to reduce a burden on a user required for the image inspection of a printed matter on which the data for printing are printed as compared to a case where the image inspection of a printed matter on which data for printing are printed is performed without the use of information on the position of an image inspection target set in the image data arranged in the data for printing.

According to the image inspection system of (((2))), in a case where the image data are rotated and the data for printing are disposed, it is possible to perform the image inspection of a printed matter on which the data for printing are printed.

According to the image inspection system of (((3))), it is possible to perform the image inspection of a printed matter on which the data for printing are printed to correspond to the enlargement or reduction of the image data in the data for printing.

According to the image inspection system of (((4))) to (((6))), it is possible to further reduce a burden on a user required for the image inspection of a printed matter on which the data for printing are printed, as compared to a case where a designation related to the position of an image inspection is not received for each of the image data.

According to the image inspection system of (((7))), it is easy to perform an image inspection corresponding to the image data as compared to a case where information on the type of an image inspection or the accuracy of an image inspection is not acquired.

According to the image inspection system of (((8))), it is possible to shorten a period until an image inspection on a plurality of data for printing is completed as compared to a case where inspection regions set in a plurality of data for printing are collectively output to the inspection execution unit.

According to the image inspection system of (((9))), processing of outputting inspection regions is simplified as compared to a case where inspection regions set in a plurality of data for printing are output for each data for printing.

According to the image inspection system of (((10))), a user can confirm positions in data for printing at which an image inspection is to be performed that are set on the basis of inspection information of image data.

According to the image inspection system of (((11))), it is possible to set positions at which an image inspection is to be performed after confirming positions in data for printing at which an image inspection is to be performed.

According to the image inspection system of (((12))), a user can confirm the change of positions in the data for printing at which an image inspection is to be performed according to the settings of positions at which an image inspection is to be performed.

According to the information processing apparatus of (((13))), it is possible to reduce a burden on a user required for the image inspection of a printed matter on which the data for printing are printed as compared to a case where the image inspection of a printed matter on which data for printing are printed is performed without the use of information on the position of an image inspection target set in the image data arranged in the data for printing.

According to the program of (((14))), it is possible to reduce a burden on a user required for the image inspection of a printed matter on which the data for printing are printed as compared to a case where the image inspection of a printed matter on which data for printing are printed is performed without the use of information on the position of an image inspection target set in the image data arranged in the data for printing.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

Brief Description of the Reference Symbols

100: printing system
20, 30: server device
21: printing instruction receiving unit
22: imposition information generation unit
23: data-for-printing generation unit
24: inspection information generation unit
25: output unit
26: display control unit
40: inspection device
44: inspection unit
60: setting screen
70: confirmation screen

**Claims**

1. An image inspection system comprising:

   a processor; and
   an inspection execution unit that performs an image inspection of a printed matter,
   wherein the processor is configured to:

   acquire first position information that is information on a position of the image inspection set in image data; and
   acquire second position information that is information on positions of the respective image data in data for printing in which the plurality of image data are arranged, and

   the inspection execution unit performs the image inspection of a printed matter on which the data for printing are printed using the first position information and the second position information.

2. The image inspection system according to claim 1, wherein the processor is configured to:

   acquire angle information that is information on rotation angles of the image data in the data for printing; and
   perform the image inspection of the printed matter using the angle information.

3. The image inspection system according to claim 1 or 2, wherein the processor is configured to:

   acquire scaling information that is information on enlargement or reduction of the image data in the data for printing; and

perform the image inspection of the printed matter using the scaling information.

4. The image inspection system according to any one of claims 1 to 3, wherein the processor is configured to:
receive a designation related to a position of the image inspection for each of the image data; and acquire the first position information.

5. The image inspection system according to claim 4, wherein the processor is configured to:
receive a designation of a region in which the image inspection is to be performed or a region in which the image inspection is not to be performed for each of the image data as the designation related to the position of the image inspection; and acquire the first position information.

6. The image inspection system according to claim 4, wherein the processor is configured to:
receive a selection of an object to be subjected to the image inspection or an object not to be subjected to the image inspection for each of the image data among objects forming the image data as the designation related to the position of the image inspection; and acquire the first position information.

7. The image inspection system according to claim 4, wherein the processor is configured to:
acquire information on at least one of a type of the image inspection or accuracy of the image inspection together with the designation related to the position of the image inspection.

8. The image inspection system according to any one of claims 1 to 7, wherein the processor is configured to:

set inspection regions in which the image inspection of the printed matter on which the data for printing are printed is to be performed using the first position information and the second position information; and
output the inspection region set in one of the plurality of data for printing to the inspection execution unit and set the inspection regions in the other data for printing different from the one of the data for printing after the image inspection of a printed matter using the one of the data for printing is started by the inspection execution unit, in a case where the inspection regions are set in the plurality of data for printing.

9. The image inspection system according to any one of claims 1 to 7, wherein the processor is configured to:

set inspection regions in which the image inspection of the printed matter on which the data for printing are printed is to be performed using the first position information and the second position information; and
collectively output the inspection regions, which are set in the plurality of data for printing, to the inspection execution unit, in a case where the inspection regions are set in the plurality of data for printing.

10. The image inspection system according to any one of claims 1 to 9, further comprising:

a display unit that displays information on the image inspection,
wherein the processor is configured to:
cause the display unit to display a display screen on which the data for printing and positions at which the image inspection of the printed matter on which the data for printing are printed is to be performed are displayed together.

11. The image inspection system according to claim 10, wherein the processor is configured to:
receive settings of positions in the data for printing at which the image inspection is to be performed via the display screen displayed on the display unit.

12. The image inspection system according to claim 11, wherein the processor is configured to:
apply the settings of the positions at which the image inspection is to be performed to the position of the image inspection set in the image data that are arranged in the data for printing, in a case where the processor receives the settings of the positions in the data for printing at which the image inspection is to be performed.

13. An information processing apparatus comprising:

a processor,
wherein the processor is configured to:

acquire first position information that is information on a position of an image inspection set in image data;
acquire second position information that is information on positions of the respective image data in data for printing in which the plurality of image data are arranged; and
determine positions at which the image inspection is to be performed on a printed matter on which the data for printing are printed using the first position information and the second position information.

14. A program causing a computer to realize:

a function of acquiring first position information that is information on a position of an image inspection set in image data;

a function of acquiring second position information that is information on positions of the respective image data in data for printing in which the plurality of image data are arranged; and

a function of determining positions at which the image inspection is to be performed on a printed matter on which the data for printing are printed using the first position information and the second position information.

# FIG. 1

# FIG. 2

20

20A

| PRINTING INSTRUCTION RECEIVING UNIT | 21 |

| IMPOSITION INFORMATION GENERATION UNIT | 22 |

| DATA-FOR-PRINTING GENERATION UNIT | 23 |

| INSPECTION INFORMATION GENERATION UNIT | 24 |

| OUTPUT UNIT | 25 |

| DISPLAY CONTROL UNIT | 26 |

| ROM | 20B |

| RAM | 20C |

FIG. 3

DATA FOR PRINTING

<FIRST SHEET>

<SECOND SHEET>

<THIRD SHEET>

<FOURTH SHEET>

EP 4 513 864 A1

# FIG. 4

| DATA FOR PRINTING | IMAGE DATA | COORDINATES (A, B) | ROTATION ANGLE | ENLARGEMENT /REDUCTION RATIO (M) |
|---|---|---|---|---|
| FIRST SHEET | FIRST PAGE | (0, 0) | 0 DEGREE | 100% |
| | FIFTH PAGE | (148, 0) | 0 DEGREE | 100% |
| | NINTH PAGE | (0, 210) | 0 DEGREE | 100% |
| | THIRTEENTH PAGE | (148, 210) | 0 DEGREE | 100% |
| SECOND SHEET | SECOND PAGE | (0, 0) | 0 DEGREE | 100% |
| | SIXTH PAGE | (148, 0) | 0 DEGREE | 100% |
| | TENTH PAGE | (0, 210) | 0 DEGREE | 100% |
| | FOURTEENTH PAGE | (148, 210) | 0 DEGREE | 100% |
| THIRD SHEET | THIRD PAGE | (0, 0) | 0 DEGREE | 100% |
| | SEVENTH PAGE | (148, 0) | 0 DEGREE | 100% |
| | ELEVENTH PAGE | (0, 210) | 0 DEGREE | 100% |
| | FIFTEENTH PAGE | (148, 210) | 0 DEGREE | 100% |
| FOURTH SHEET | FOURTH PAGE | (0, 0) | 0 DEGREE | 100% |
| | EIGHTH PAGE | (148, 0) | 0 DEGREE | 100% |
| | TWELFTH PAGE | (0, 210) | 0 DEGREE | 100% |
| | BLANK | | | |

# FIG. 5

10

| 15 | 16 |
| --- | --- |
| DATA-FOR-PRINTING RECEIVING UNIT | PRINTING CONTROL UNIT |

| 17 | 18 |
| --- | --- |
| PRINTED MATTER SCAN CONTROL UNIT | SCAN DATA TRANSMISSION UNIT |

19

SHEET DISCHARGE CONTROL UNIT

40

| 41 | 42 |
| --- | --- |
| INSPECTION INFORMATION ACQUISITION UNIT | DATA-FOR-PRINTING ACQUISITION UNIT |

| 43 | 44 |
| --- | --- |
| SCAN DATA ACQUISITION UNIT | INSPECTION UNIT |

45

INSPECTION RESULT TRANSMISSION UNIT

# FIG. 6

| IMAGE DATA | INSPECTION TARGET REGION | |
|---|---|---|
| FIRST PAGE | COORDINATES (a, b): (10, 10)<br>WIDTH AND LENGTH (w, l): (128, 100) | – |
| ⋮ | ⋮ | – |
| FIFTH PAGE | COORDINATES (a, b): (2, 10)<br>WIDTH AND LENGTH (w, l): (20, 20) | COORDINATES (a, b): (22, 100)<br>WIDTH AND LENGTH (w, l): (100, 50) |
| ⋮ | ⋮ | – |
| NINTH PAGE | COORDINATES (a, b): (20, 40)<br>WIDTH AND LENGTH (w, l): (100, 30) | – |
| ⋮ | ⋮ | – |
| THIRTEENTH PAGE | COORDINATES (a, b): (10, 10)<br>WIDTH AND LENGTH (w, l): (128, 100) | – |
| ⋮ | ⋮ | – |

FIG. 7A

FIG. 7B

FIG. 7C

FIG. 7D

FIG. 7E

FIG. 7F

EP 4 513 864 A1

# FIG. 8

| DATA FOR PRINTING | INSPECTION REGION |
|---|---|
| FIRST SHEET | COORDINATES (X, Y): (10, 10)<br>WIDTH AND LENGTH (W, L): (128, 100) |
| | COORDINATES (X, Y): (150, 10)<br>WIDTH AND LENGTH (W, L): (20, 20) |
| | COORDINATES (X, Y): (170, 100)<br>WIDTH AND LENGTH (W, L): (100, 50) |
| | COORDINATES (X, Y): (20, 250)<br>WIDTH AND LENGTH (W, L): (100, 30) |
| | COORDINATES (X, Y): (158, 220)<br>WIDTH AND LENGTH (W, L): (128, 100) |

# FIG. 9

DATA FOR PRINTING

(A, B)

IMAGE DATA

IMAGE DATA

(a, b)

$w$

$l$

INSPECTION TARGET REGION

$\Rightarrow$

DATA FOR PRINTING

INSPECTION REGION

$(X, Y) = (A + a \times M, B + b \times M)$

$L = l \times M$

$W = w \times M$

IMAGE DATA

EP 4 513 864 A1

## FIG. 10A

DATA FOR PRINTING

$(X, Y) = (A - b \times M, B + a \times M)$

$W = l \times M$

$L = w \times M$

IMAGE DATA

INSPECTION REGION

## FIG. 10B

DATA FOR PRINTING

IMAGE DATA

$W = w \times M$

$L = l \times M$

$(A, B)$

INSPECTION REGION

$(X, Y) = (A - a \times M, B - b \times M)$

## FIG. 10C

DATA FOR PRINTING

IMAGE DATA

$L = w \times M$

$W = l \times M$

$(A, B)$

$(X, Y) = (A + b \times M, B - a \times M)$

INSPECTION REGION

EP 4 513 864 A1

# FIG. 11A

DATA FOR PRINTING

‹FIRST SHEET›　　　　　　　‹SECOND SHEET›

# FIG. 11B

| DATA FOR PRINTING | IMAGE DATA | COORDINATES (A, B) | ROTATION ANGLE | ENLARGEMENT/REDUCTION RATIO (M) |
|---|---|---|---|---|
| FIRST SHEET | FIFTH PAGE | (148, 210) | 180 DEGREES | 100% |
| | FOURTH PAGE | (296, 210) | 180 DEGREES | 100% |
| | EIGHTH PAGE | (0, 210) | 0 DEGREE | 100% |
| | FIRST PAGE | (148, 210) | 0 DEGREE | 100% |
| SECOND SHEET | THIRD PAGE | (148, 210) | 180 DEGREES | 100% |
| | SIXTH PAGE | (296, 210) | 180 DEGREES | 100% |
| | SECOND PAGE | (0, 210) | 0 DEGREE | 100% |
| | SEVENTH PAGE | (148, 210) | 0 DEGREE | 100% |

EP 4 513 864 A1

# FIG. 12A

IMAGE DATA

FIRST PAGE, FOURTH PAGE, SEVENTH PAGE — INSPECTION TARGET REGION

SECOND PAGE, FIFTH PAGE, EIGHTH PAGE — INSPECTION TARGET REGION

THIRD PAGE, SIXTH PAGE — INSPECTION TARGET REGION

# FIG. 12B

| IMAGE DATA | INSPECTION TARGET REGION |
|---|---|
| FIRST, FOURTH, SEVENTH PAGES | COORDINATES (a, b): (10, 10) WIDTH AND LENGTH (w, l): (128, 100) |
| SECOND, FIFTH, EIGHTH PAGES | COORDINATES (a, b): (2, 10) WIDTH AND LENGTH (w, l): (20, 20) |
| THIRD, SIXTH PAGES | COORDINATES (a, b): (20, 40) WIDTH AND LENGTH (w, l): (100, 30) |

EP 4 513 864 A1

## FIG. 13B

DATA FOR PRINTING

| DATA FOR PRINTING | | INSPECTION REGION |
|---|---|---|
| FIRST SHEET | | COORDINATES (X, Y): (146, 200)<br>WIDTH AND LENGTH (W, L): (20, 20) |
| | | COORDINATES (X, Y): (286, 200)<br>WIDTH AND LENGTH (W, L): (128, 100) |
| | | COORDINATES (X, Y): (2, 220)<br>WIDTH AND LENGTH (W, L): (20, 20) |
| | | COORDINATES (X, Y): (158, 220)<br>WIDTH AND LENGTH (W, L): (128, 100) |
| SECOND SHEET | | COORDINATES (X, Y): (128, 170)<br>WIDTH AND LENGTH (W, L): (100, 30) |
| | | COORDINATES (X, Y): (276, 170)<br>WIDTH AND LENGTH (W, L): (100, 30) |
| | | COORDINATES (X, Y): (2, 220)<br>WIDTH AND LENGTH (W, L): (20, 20) |
| | | COORDINATES (X, Y): (158, 220)<br>WIDTH AND LENGTH (W, L): (128, 100) |

## FIG. 13A

DATA FOR PRINTING

⟨FIRST SHEET⟩

⟨SECOND SHEET⟩

INSPECTION REGION

## FIG. 14

```
                    ┌─────────────┐
                    │    START    │
                    └──────┬──────┘
                           │
                           ▼
        ┌──────────────────────────────────┐
        │  ACQUIRE PAGE NUMBERS            │
        │  OF IMAGE DATA ARRANGED IN DATA  │── S101
        │  FOR PRINTING OF Nth SHEET       │
        └──────────────────┬───────────────┘
                           │
                           ▼
        ┌──────────────────────────────────┐
        │  ACQUIRE COORDINATES, ROTATION   │
        │  ANGLE, AND ENLARGEMENT/         │── S102
        │  REDUCTION RATIO OF IMAGE DATA   │
        └──────────────────┬───────────────┘
                           │
                           ▼
        ┌──────────────────────────────────┐
        │  ACQUIRE COORDINATES, WIDTH,     │
        │  AND LENGTH OF INSPECTION TARGET │── S103
        │  REGION OF IMAGE DATA            │
        └──────────────────┬───────────────┘
                           │
                           ▼
        ┌──────────────────────────────────┐
        │  CALCULATE COORDINATES, WIDTH,   │
        │  AND LENGTH OF INSPECTION REGION │── S104
        │  IN DATA FOR PRINTING            │
        └──────────────────┬───────────────┘
                           │
                           ▼    S105
              ╱───────────────────────╲   YES
              ╲  ARE THERE OTHER      ╱──────→ (loop to S102)
              ╱  IMAGE DATA?          ╲
              ╲───────────────────────╱
                           │ NO
                           ▼
        ┌──────────────────────────────────┐
        │  OUTPUT INSPECTION INFORMATION   │── S106
        └──────────────────┬───────────────┘
                           │
                           ▼    S107
              ╱───────────────────────╲   YES
              ╲  IS THERE NEXT DATA    ╱──────→ ┌──────────┐ S108
              ╱  FOR PRINTING?         ╲        │ N = N + 1│
              ╲───────────────────────╱        └──────────┘
                           │ NO                  (loop to S101)
                           ▼
                    ┌─────────────┐
                    │     END     │
                    └─────────────┘
```

## FIG. 15

SETTING OF INSPECTION TARGET REGION

CONFIRMATION OF DATA FOR PRINTING

LAYOUT      A4 (210 × 297 mm) ▼

SHEET SIZE      ☐ VERTICAL ▼

ACCURACY OF IMAGE INSPECTION      NORMAL ▼
HIGH ACCURACY

INSPECTION TARGET REGION

| | COORDINATES | WIDTH × LENGTH | TYPE OF IMAGE INSPECTION |
|---|---|---|---|
| 1 | (16.09, 114.31) | 137.94 × 55.95 | CONSISTENCY INSPECTION ▼ |
| | | | IMAGE DEFECT INSPECTION |

PAYMENT SLIP

| XXXX-X-XXXX | XXXX |
|---|---|
| XXXXXXX | |

⏮ ◁ [2] / 5 ▷ ⏭

RESET      CANCEL      OK

EP 4 513 864 A1

## FIG. 16

EP 4 513 864 A1

CONFIRMATION OF DATA FOR PRINTING

SETTING OF INSPECTION TARGET REGION

LAYOUT    A3 (297 × 420 mm) ▼

SHEET SIZE    ☐ VERTICAL ▼

ACCURACY OF IMAGE INSPECTION    NORMAL ▼

INSPECTION TARGET REGION

|   | COORDINATES | WIDTH × LENGTH | TYPE OF IMAGE INSPECTION |
|---|---|---|---|
| 1 | (10.09, 114.31) | 98.94 × 65.95 | IMAGE DEFECT INSPECTION |
| 2 | (153.04, 158.41) | 100.94 × 35.44 | CONSISTENCY INSPECTION |
| 3 | (10.099, 114.31) | 90.38 × 58.69 | IMAGE DEFECT INSPECTION |
| 4 | (164.59, 324.31) | 98.94 × 65.95 | IMAGE DEFECT INSPECTION |

BILL
xxx CORPORATION

| ITEM | AMOUNT |
|---|---|

PAYMENT SLIP

| XXXX-X-XXXX | XXXX |
|---|---|
| XXXXXXX | |

XXX-XXXX

BILL
xxx CORPORATION

| ITEM | AMOUNT |
|---|---|

|◁  ◁  ☐1 / 2  ▷  ▷|

RESET    CANCEL    START PRINTING

Europäisches
Patentamt

European
Patent Office

Office européen
des brevets

# EUROPEAN SEARCH REPORT

Application Number

EP 24 15 5321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/121550 A1 (KOMAZAWA HISAO [JP] ET AL) 20 April 2023 (2023-04-20) * paragraphs [0004], [0035], [0067] – [0068], [0076], [0084], [0162]; figures 4,7,8A,9 * | 1–14 | INV. H04N1/00 G06F3/12 |
| Y,D | JP 2020 093425 A (KONICA MINOLTA INC) 18 June 2020 (2020-06-18) * paragraphs [0009] – [0010], [0043], [0069], [0073] – [0074]; figures 11A,11B * | 1–14 | |
| Y | EP 4 011 635 A1 (CANON KK [JP]) 15 June 2022 (2022-06-15) | 1,13,14 | |
| A | * paragraph [0160]; figure 21A * | 2–12 | |

TECHNICAL FIELDS
SEARCHED (IPC)

H04N
G06F

The present search report has been drawn up for all claims

| Place of search | Date of completion of the search | Examiner |
|---|---|---|
| The Hague | 16 May 2024 | Azaustre Maleno, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 24 15 5321**

This annex lists the patent family members relating to the patent documents cited in the above-mentioned European search report.
The members are as contained in the European Patent Office EDP file on
The European Patent Office is in no way liable for these particulars which are merely given for the purpose of information.

**16-05-2024**

| Patent document cited in search report | | | Publication date | Patent family member(s) | | | Publication date |
|---|---|---|---|---|---|---|---|
| US 2023121550 | A1 | | 20-04-2023 | JP | 2023060605 | A | 28-04-2023 |
| | | | | US | 2023121550 | A1 | 20-04-2023 |
| JP 2020093425 | A | | 18-06-2020 | JP | 7143750 | B2 | 29-09-2022 |
| | | | | JP | 2020093425 | A | 18-06-2020 |
| EP 4011635 | A1 | | 15-06-2022 | CN | 114269565 | A | 01-04-2022 |
| | | | | EP | 4011635 | A1 | 15-06-2022 |
| | | | | JP | 7433802 | B2 | 20-02-2024 |
| | | | | JP | 2021024223 | A | 22-02-2021 |
| | | | | US | 2022156020 | A1 | 19-05-2022 |
| | | | | WO | 2021024733 | A1 | 11-02-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020093425 A